# EUROPEAN PATENT SPECIFICATION

(11) **EP 1 154 348 B1**
(45) Date of publication and mention of the grant of the patent: **09.05.2007**
(21) Application number: 01304182.7
(22) Date of filing: 09.05.2001
(51) Int. Cl.: G06F 1/00

(54) **File management apparatus**
Vorrichtung zur Dateienverwaltung
Appareil pour la gestion de fichiers

(30) Priority: 11.05.2000 JP 2000138642
(43) Date of publication of application: 14.11.2001
(73) Proprietor: MATSUSHITA ELECTRIC INDUSTRIAL CO., LTD., Kadoma-shi, Osaka 571-8501 (JP)
(72) Inventor: Matsuzaki, Natsume, Minou-shi, Osaka-fu 562-0023 (JP); Emura, Satoshi, Toyonaka-shi, Osaka-fu 560-0034 (JP); Inagaki, Saturu, Suita-shi, Osaka-fu 564-0063 (JP)
(74) Representative: Crawford, Andrew Birkby

(56) References cited:
- US-A- 5 802 175
- SCHNEIER B: "Applied Cryptography, PASSAGE" APPLIED CRYPTOGRAPHY. PROTOCOLS, ALGORITHMS, AND SOURCE CODE IN C, NEW YORK, JOHN WILEY & SONS, US, 1996, pages 1-3, XP002271518 ISBN: 0-471-11709-9
- BRUCE SCHNEIER ED - SCHNEIER B: "Applied Cryptography, second edition" APPLIED CRYPTOGRAPHY. PROTOCOLS, ALGORITHMS, AND SOURCE CODE IN C, NEW YORK, JOHN WILEY & SONS, US, 1996, pages 169-187, XP002111449 ISBN: 0-471-11709-9
- LUCKHARDT N: "PASSWORT PORTFOLIO" CT MAGAZIN FUER COMPUTER TECHNIK, VERLAG HEINZ HEISE GMBH., HANNOVER, DE, no. 13, 21 June 1999 (1999-06-21), page 72, XP000828972 ISSN: 0724-8679

## Description

### BACKGROUND OF THE INVENTION

### (1) Field of the Invention

The present invention relates to a file management apparatus that encrypts and stores information, to prevent third parties from knowing its contents.

### (2) Related Art

With the widespread use of computers, techniques for storing information after encrypting the information have been generally employed to prevent third parties from knowing the contents of the information.

Japanese Laid-Open Patent Application No. H9-204330 discloses a technique for encrypting a file in a computer using an encryption key and storing the encrypted file in a specific encrypted information storage area, to allow only specific users to have access to the encrypted information storage area with registered authentication passwords. Each specific user memorizes an authentication password. When the user inputs the authentication password, a decryption key is automatically selected so as to decrypt the encrypted file. Here, the authentication password may be composed of a character string or a number that is short enough for a person to memorize, and the encryption key and the decryption key have more bits than the authentication password.

According to the above technique, however, the difficulty still lies in that the user has to memorize the authentication password. In case the use forgets the authentication password, he or she cannot decrypt the encrypted file.

Prior Publication *SCHNEIER B: "Applied Cryptography, PASSAGE" APPLIED CRYPTOGRAPHY, PROTOCOLS, ALGORITHMS AND SOURCE CODE IN C, NEW YORK, JOHN WILEY & SONS, US, 1996, pages 1-3, XP002271518 ISBN:0-471-11709-*9", relates to computer security. The reference discloses the basic operations of cryptography and the use of a key for encrypting a plaintext data to produce ciphertext data and a decryption of the ciphertext data using the key to produce the plaintext data.

### SUMMARY OF THE INVENTION

In view of the above problem, the object of the present invention is to provide a file management apparatus that is capable of managing encrypted information securely, and that ensures decryption of the encrypted information even when the user forgets a password.

The above object can be achieved by a file management apparatus that encrypts a plaintext to generate a ciphertext, stores the ciphertext, and decrypts the ciphertext, the file management apparatus including: a key storage medium storing key information beforehand; a registration unit for encrypting the key information using a password to generate an encrypted key; an encryption unit for encrypting a plaintext based on the key information to generate a ciphertext; a switch unit for switching between (a) generating key information by decrypting the encrypted key using the password and (b) reading the key information from the key storage medium; and a decryption unit for decrypting the ciphertext based on one of the generated key information and the read key information. The file management apparatus may further include a memory unit, wherein the registration unit receives an input of the password, encrypts the key information using the received password to generate the encrypted key, and writes the generated encrypted key to the memory unit, the encryption unit encrypts the plaintext using a file key to generate the ciphertext, encrypts the file key using the key information to generate an encrypted file key, and writes the ciphertext in association with the encrypted file key, to the memory unit, the switch unit (a) includes a first key obtaining unit for receiving an input of the password and decrypting the encrypted key using the received password to generate the key information, and a second key obtaining unit for reading the key information from the key storage medium, and (b) obtains the key information by one of the first key obtaining unit and the second key obtaining unit, and the decryption unit decrypts the encrypted file key using the obtained key information to generate a file key, and decrypts the ciphertext using the file key to generate a decrypted text.

According to this construction, operations are switched between (a) generating key information by decrypting the encrypted key using the password and (b) reading key information from the key storage medium, and the ciphertext is decrypted based on the generated key information or the read key information. Therefore, the ciphertext can be decrypted without a password.

The above object can also be achieved by a file management apparatus that encrypts a plaintext to generate a ciphertext, stores the ciphertext, and decrypts the ciphertext, the file management apparatus including: a key storage medium storing key information beforehand; a registration unit for encrypting a password using the key information to generate an encrypted password; an encryption unit for encrypting a plaintext using a file key to generate a ciphertext, encrypting the file key based on a password obtained by decrypting the encrypted password to generate a first encrypted file key, and encrypting the file key based on the key information to generate a second encrypted file key; a switch unit for switching between (a) decrypting the first encrypted file key based on the password and (b) decrypting the second encrypted file key based on the key information, to generate a file key; and a decryption unit for decrypting the ciphertext using the generated file key.
The file management apparatus may further include a memory unit, wherein the registration unit receives an input of the password, encrypts the received password using the key information to generate the encrypted password, and writes the generated encrypted password to the memory unit, the encryption unit decrypts the encrypted password using the key information to generate the password, encrypts the plaintext using the file key to generate the ciphertext, encrypts the file key using the password to generate the first encrypted file key, encrypts the file key using the key information to generate the second encrypted file key, and writes the ciphertext in association with the first encrypted file key and the second encrypted file key, to the memory unit, the switch unit (a) includes a first key obtaining unit for receiving an input of the password and decrypting the first encrypted fie key using the received password, and a second key obtaining unit for decrypting the second encrypted file key using the key information, and (b) obtains the file key by one of the first key obtaining unit and the second key obtaining unit, and the decryption unit decrypts the ciphertext using the obtained file key to generate a decrypted text.

According to this construction, operations are switched between (a) decrypting the encrypted file key based on the password and (b) decrypting an encrypted file key based on the key information, to generate a file key, and the ciphertext is decrypted based on the file key. Therefore, the ciphertext can be decrypted without a password.

### BRIEF DESCRIPTION OF THE DRAWINGS

These and other objects, advantages and features of the invention will become apparent from the following description thereof taken in conjunction with the accompanying drawings that illustrate a specific embodiment of the invention. In the drawings:
Fig. 1 shows an appearance of a file management apparatus relating to a first embodiment of the present invention;
Fig. 2 is a block diagram showing a construction of the file management apparatus;
Fig. 3 is a flowchart showing an operation of a password registration unit in the first embodiment;
Fig. 4 is a flowchart showing an operation of a file encryption unit in the first embodiment;
Fig. 5 is a flowchart showing an operation of a file decryption unit in the first embodiment;
Fig. 6 shows an example of a user ID table;
Fig. 7 is a flowchart showing an operation of the file management apparatus when a password is changed;
Fig. 8 is a flowchart showing an operation of the file management apparatus when key information is changed;
Fig. 9 shows an example of data structure of an encrypted file in the first embodiment;
Fig. 10 is a block diagram showing a construction of a file apparatus relating to a second embodiment of the present invention;
Fig. 11 is a flowchart showing an operation of a password registration unit in the second embodiment;
Fig. 12 is a flowchart showing an operation of a file encryption unit in the second embodiment;
Fig. 13 is a flowchart showing an operation of a file decryption unit in the second embodiment;
Fig. 14 is a flowchart showing an operation of the file management apparatus when a password is changed;
Fig. 15 is a flowchart showing an operation of the file management apparatus when key information is changed;
Fig. 16 is a flowchart showing an operation when a key storage medium is lost in the second embodiment. To be continued to Fig. 17;
Fig. 17 is a flowchart showing the operation when the key storage medium is lost in the second embodiment. To be continued to Fig. 18; and
Fig. 18 is a flowchart showing the operation when the key storage medium is lost in the second embodiment. Continued from Fig. 17.

### DESCRIPTION OF THE PREFERRED EMBODIMENTS

The following is an explanation of preferred embodiments of the present invention, with reference to the drawings.

### 1. First Embodiment

The following is an explanation of a file management apparatus 10 relating to a first embodiment of the present invention.

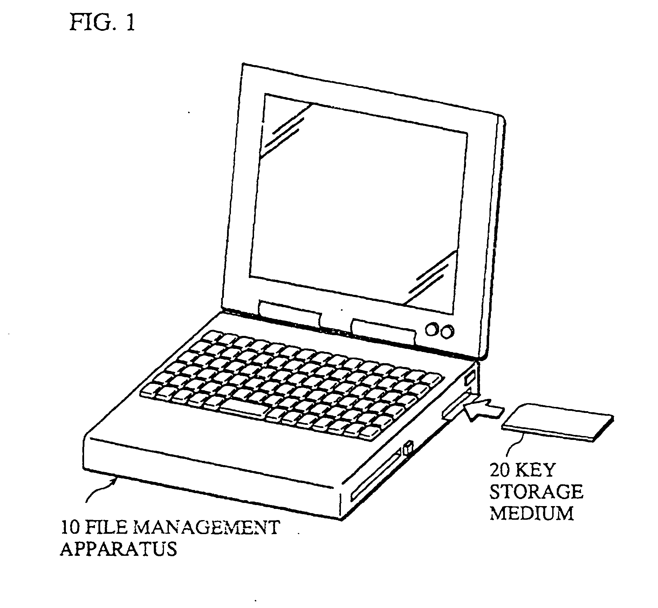

Fig. 1 shows an appearance of the file management apparatus 10. As shown in the figure, the file management apparatus 10 is a computer system that is roughly composed of a microprocessor, a ROM, a RAM, a hard disc unit, a display unit, and a keyboard. The RAM or the hard disk unit stores a computer program. The functions of the file management apparatus 10 are realized by the microprocessor operating according to the computer program. A key storage medium 20 which stores key information beforehand is equipped in the file management apparatus 10.

### 1.1 Constructions of the File Management Apparatus 10 and the Key Storage Medium 20

The following is an explanation of the constructions of the file management apparatus 10 and the key storage medium 20.

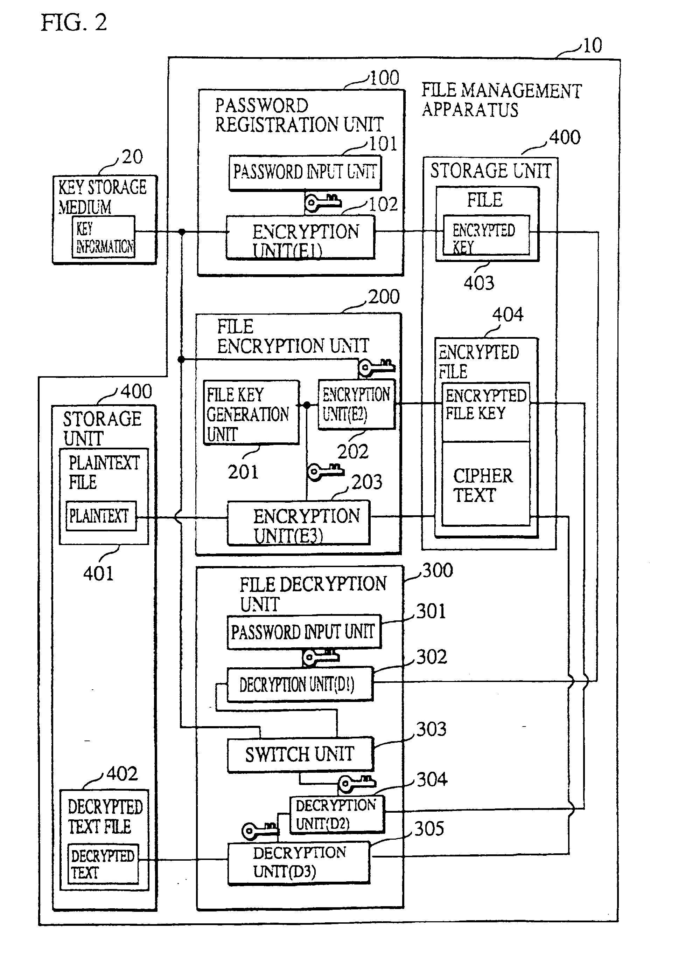

As shown in Fig. 2, the file management apparatus 10 includes a password registration unit 100, a file encryption unit 200, a file decryption unit 300, and a storage unit 400, and the key storage medium 20 is connected to the file management apparatus 10.

The password registration unit 100 includes a password input unit 101 and an encryption unit 102. The file encryption unit 200 includes a file key generation unit 201, an encryption unit 202, and an encryption unit 203. The file decryption unit 300 includes a password input unit 301, a decryption unit 302, a switch unit 303, a decryption unit 304, and a decryption unit 305.

### (1) Key Storage Medium 20

The key storage medium 20 is a portable storage medium having a storage area made up of a nonvolatile semiconductor memory. The storage area stores 56-bit key information beforehand.

The key information is unique to a user, and the user usually possesses the key storage medium 20. To operate the file management apparatus 10, the user inserts the key storage medium 20 in a special drive equipped with the file management apparatus 10, to connect the key storage medium 20 to the file management apparatus 10.

### (2) Storage Unit 400

The storage unit 400 is constructed of a hard disc unit, and is internally equipped with a storage area for storing information as files. Each file is identified by a file name.

The storage unit 400 stores a plaintext file 401 beforehand, the plaintext 401 storing a plaintext.

### (3) Password Input Unit 101

The password input unit 101 receives an input of a password from the user. Here, the password is a string of eight characters composed of numerals and alphabets. The password input unit 101 outputs the received password to the encryption unit 102.

### (4) Encryption Unit 102

The encryption unit 102 receives the password from the password input unit 101. On receipt of the password, the encryption unit 102 reads the key information from the storage area of the key storage medium 20, adds a plurality of zero bits to the end of the password to make it 56 bits long, and adds a plurality of zero bits to the end of the key information to make the key information 64 bits long. Following this, the encryption unit 102 subjects the key information to the encryption algorithm E1 using the password as a key to generate an encrypted key. Here, the encryption algorithm E1 complies with Data Encryption Standard (DES). Note that DES is well-known, and so it is not explained here.

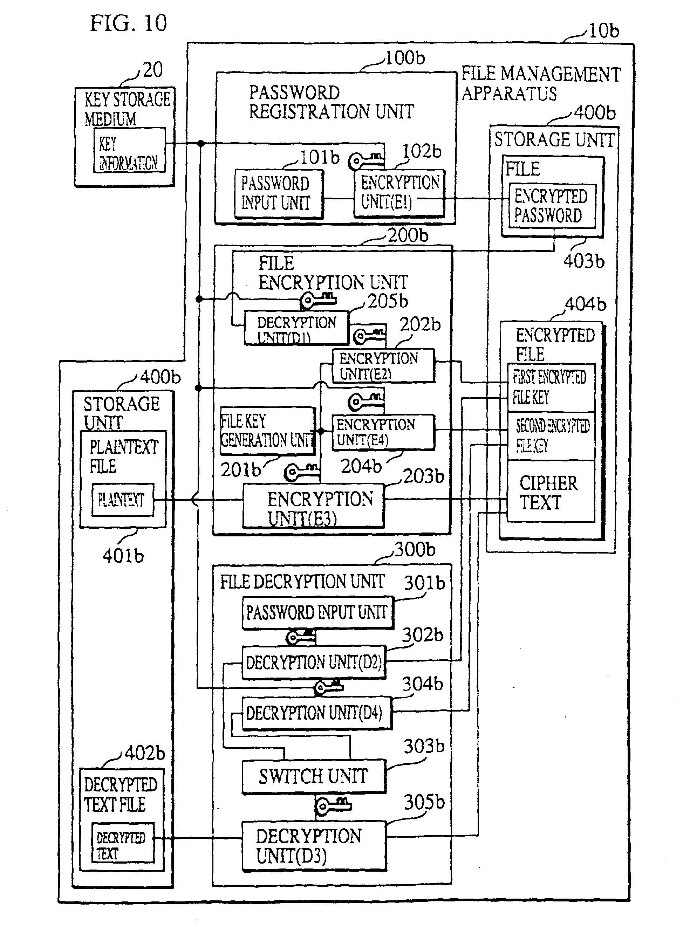

In a block diagram in Fig. 2, a key mark near a line connecting the password input unit 101 and the encryption unit 102 indicates that the encryption unit 102 uses the password outputted from the password input unit 101 as a key. The same applies to other encryption and decryption units in Fig. 2, and to encryption and decryption units in Fig. 10.

The encryption unit 102 then writes the generated encrypted key as a file to the storage unit 400.

### (5) File Key Generation Unit 201

The file key generation unit 201 is internally equipped with a random number generation unit and a timer, and so generates a 56-bit random number, acquires the current time expressed by year, month, day, hour, minute, second, and millisecond, takes an exclusive-OR of the generated random number and the acquired current time so as to generate a file key that is 56 bits long, and outputs the generated file key to the encryption unit 202 and the encryption unit 203.

### (6) Encryption Unit 203

The encryption unit 203 receives the user designation of a file name of the plaintext file 401 stored in the storage unit 400, and reads the plaintext file 401 identified by the file name from the storage unit 400. Also, the encryption unit 203 receives the file key from the file key generation unit 201.

The encryption unit 203 then subjects a plaintext included in the plaintext file 401 to the encryption algorithm E3 using the received file key as a key, to generate a ciphertext. The encryption unit 203 then writes an encrypted file 404 to the storage unit 400. The encrypted file 404 is composed of a header part, and a data part that includes the generated ciphertext. It should be noted here that the encryption algorithm E3 complies with DES.

Here, when the plaintext is at least 64 bits long, the encryption unit 203 divides the plaintext into a plurality of plaintext blocks, each plaintext block being 64 bits long. The encryption unit 203 then subjects each plaintext block to the encryption algorithm E3 to generate a ciphertext block, and concatenates each generated ciphertext block to form a ciphertext.

### (7) Encryption Unit 202

The encryption unit 202 reads the key information from the key storage medium 20, receives the file key from the file key generation unit 201, and adds a plurality of zero bits to the end of the file key so as to make the file key 64 bits long.

The encryption unit 202 then subjects the file key to the encryption algorithm E2 using the read key information as a key to generate an encrypted file key, and writes the generated encrypted file key into the header part of the encrypted file 404 in the storage unit 400. It should be noted here that the encryption algorithm E2 complies with DES.

### (8) Switch Unit 303

The switch unit 303 receives an input of either a first type or a second type from the user. The first type indicates to decrypt a ciphertext using a password, and the second type indicates to decrypt a ciphertext using key information.

When the input of the first type is received, the switch unit 303 receives the key information from the decryption unit 302, and outputs the received key information to the decryption unit 304. When the input of the second type is received, the switch unit 303 reads the key information from the key storage medium 20, and outputs the read key information to the decryption unit 304.

### (9) Password Input Unit 301

The password input unit 301, as the password input unit 101, receives the input of the password from the user and outputs the received password to the decryption unit 302.

### (10) Decryption Unit 302

The decryption unit 302 receives the password from the password input unit 301, reads the encrypted key from the storage unit 400, adds a plurality of zero bits to the end of the password so as to make the password 56 bits long, and subjects the read encrypted key to the decryption algorithm D1 using the password as a key to generate key information. It should be noted here that the decryption algorithm D1 complies with DES, and is to perform the inverse conversion to the encryption algorithm E1.

Following this, the decryption unit 302 deletes the bit string of the generated key information except the first 56 bits, and outputs the 56-bit key information to the switch unit 303.

### (11) Decryption Unit 304

The decryption unit 304 receives the key information from the switch unit 303, reads the encrypted file key included in the header part of the encrypted file 404 in the storage unit 400, and subjects the read encrypted file key to the decryption algorithm D2 using the received key information as a key to generate a fie key. It should be noted here that the decryption algorithm D2 complies with DES, and is to perform the inverse conversion to the encryption algorithm E2.

The decryption unit 304 then deletes the bit string of the generated file key except the first 56 bits, and outputs the 56-bit file key to the decryption unit 305.

### (12) Decryption Unit 305

The decryption unit 305 receives the file key from the decryption unit 304, reads the ciphertext included in the data part of the encrypted file 404 in the storage unit 400, and subjects the read ciphertext to the decryption algorithm D3 using the received file key as a key to generate a decrypted text. It should be noted here that the decryption algorithm D3 complies with DES, and is to perform the inverse conversion to the encryption algorithm E3.

Here, when the ciphertext is at least 64 bits long, the decryption unit 305 divides the ciphertext into a plurality of ciphertext blocks, each ciphertext block being 64 bits long. The decryption unit 305 then subjects each ciphertext block to the decryption algorithm D3 to generate a decrypted text block, and concatenates each generated decrypted text block to form a decrypted text.

Following this, the decryption unit 305 writes a decrypted text file 402 including the generated decrypted text to the storage unit 400.

### 1.2 Operation of the File Management Apparatus 10

The following is an explanation of the operation of the file management apparatus 10.

### (1) Operation of the Password Registration Unit 100

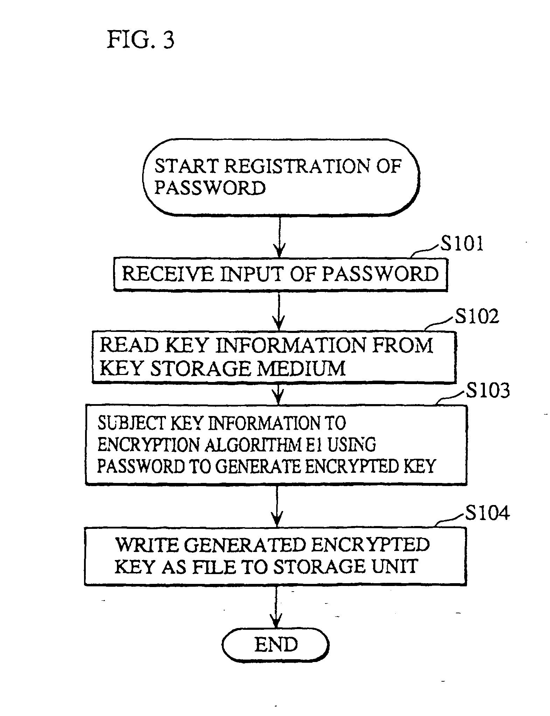

The following is an explanation of the operation of the password registration unit 100, with reference to a flowchart shown in Fig. 3.

The password input unit 101 receives an input of a password from the user, and outputs the received password to the encryption unit 102 (step S101).

The encryption unit 102 then reads key information from the storage area of the key storage medium 20 (step S102), subjects the read key information to the encryption algorithm E1 using the password as a key to generate an encrypted key (step S103), and writes the generated encrypted key as a file to the storage unit 400 (step S104).

### (2) Operation of the File Encryption Unit 200

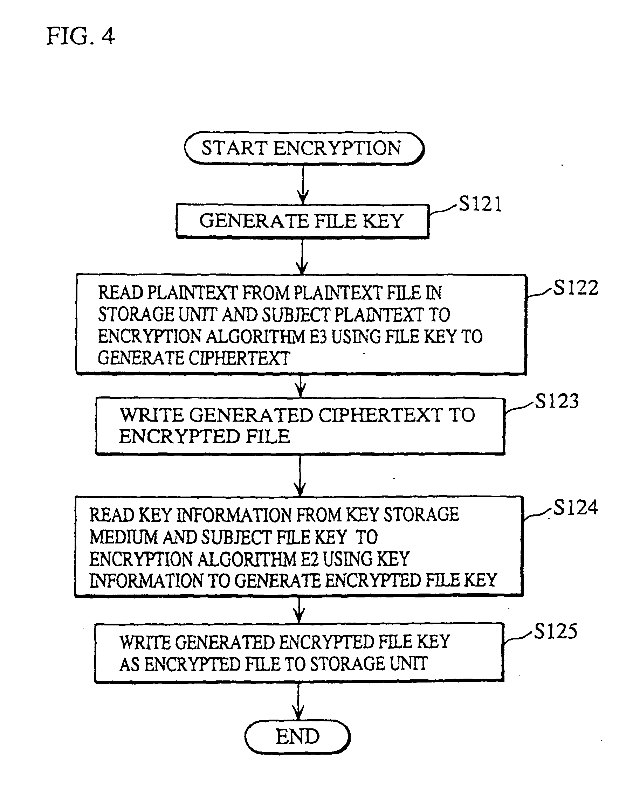

The following is an explanation of the operation of the file encryption unit 2CO, with reference to a flowchart shown in Fig. 4.

The file key generation unit 201 generates a file key (step S121). Following this, the encryption unit 203 reads the plaintext file 401 from the storage unit 400, subjects a plaintext stored in the plaintext file 401 to the encryption algorithm E3 using the generated file key as a key to generate a ciphertext (step S122), and writes the encrypted file 404 including the generated ciphertext in the data part thereof, to the storage unit 400 (step S123).

Following this, the encryption unit 202 reads key information from the key storage medium 20, receives the file key from the file key generation unit 201, subjects the received file key to the encryption algorithm E2 using the read key information as a key to generate an encrypted file key (step S124), and writes the generated encrypted file key into the header part of the encrypted file 404 in the storage unit 400 (step S125).

### (3) Operation of the File Decryption Unit 300

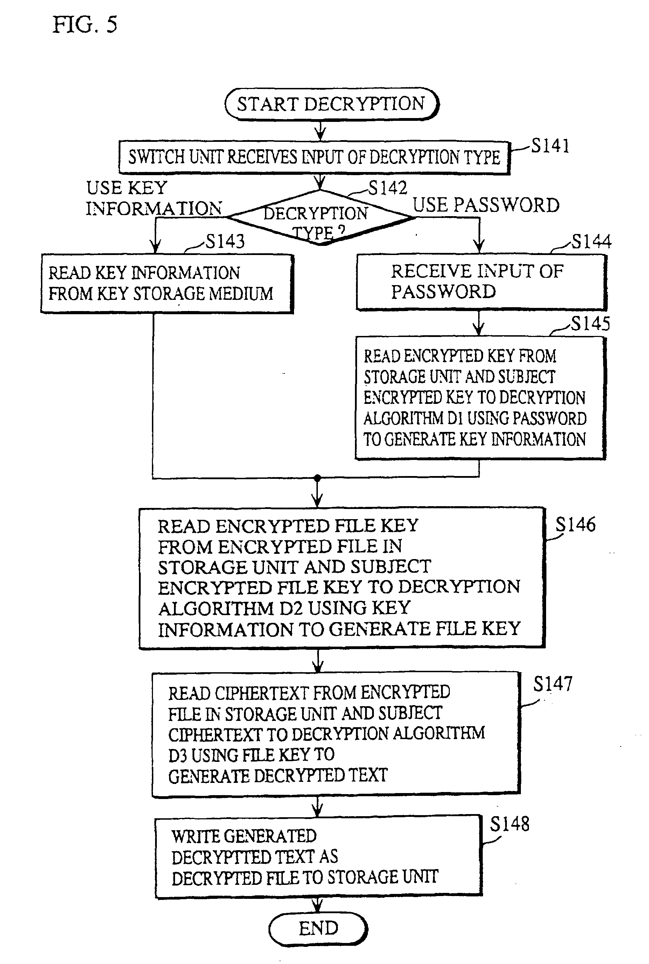

The following is an explanation of the operation of the file decryption unit 300, with reference to a flowchart shown in Fig. 5.

The switch unit 303 receives an input of either the first type or the second type from the user (step S141).

When the switch unit 303 receives the input of the first type (step S142), the password input unit 301 receives an input of a password from the user and outputs the received password to the decryption unit 302 (step S144). The decryption unit 302 reads an encrypted key from the storage unit 400, subjects the read encrypted key to the decryption algorithm D1 using the password as a key to generate key information, and outputs the generated key information to the decryption unit 304 via the switch unit 303 (step S145).

When the switch unit 303 receives the input of the second type (step S142), the switch unit 303 reads key information from the key storage medium 20, and outputs the read key information to the decryption unit 304 (step S143).

Following this, the decryption unit 304 receives the key information from the switch unit 303, reads an encrypted file key included in the header part of the encrypted file 404 in the storage unit 400, and subjects the read encrypted file key to the decryption algorithm C2 using the received key information as a key to generate a file key (step S146). The decryption unit 305 reads a ciphertext included in the data part of the encrypted file 404 in the storage unit 400, subjects the read ciphertext to the decryption algorithm D3 using the file key as a key to generate a decrypted text (step S147), and writes the decrypted text file 402 including the generated decrypted text, to the storage unit 400 (step S148).

### 1.3 Conclusions

As described above, the file management apparatus 10 has the three functions : password registration; plaintext encryption; and ciphertext decryption.

For registering a password, the user loads the key storage medium 20 on the file management apparatus 10, and inputs a password to be registered. The password registration unit 100 encrypts key information using the input password, and stores the generated encrypted key as a file in the computer.

For encrypting a plaintext, the user loads the key storage medium 20 on the file management apparatus 10, and designates a file to be encrypted. Here, a password does not need to be inputted for encrypting each plaintext, which makes the encryption processing easier for the user. The file encryption unit 200 generates a file key arbitrarily, encrypts the generated file key using the key information to generate an encrypted file key, encrypts information stored in the file using the generated file key to generate a ciphertext, and writes an encrypted file to the storage unit 400, the encrypted file including the encrypted file key in the header part thereof and the ciphertext in the data part thereof.

For decrypting a ciphertext, there are two methods, one using key information and the other using a password. When using key information, the file decryption unit 300 decrypts an encrypted file key obtained from the header part of the encrypted file using the key information, to obtain a file key. The file decryption unit 300 then decrypts a ciphertext using the obtained file key as a key. When using a password, the file decryption unit 300 receives an input of a password from the user, decrypts an encrypted key using the received password to obtain key information, decrypts an encrypted file key using the key information to obtain a file key, and finally decrypts a ciphertext using the file key as a key to obtain the plaintext.

According to the above construction of the file management apparatus 10, encrypted information is usually decrypted using key information, and when the user fails to bring a key storage medium storing key information, encrypted information can be decrypted using a password as described above.

### 1.4 Modifications

Although the present invention has been described based on the first embodiment, the invention should not be limited to such. For instance, the file management apparatus 10 may be constructed according to the following modifications.

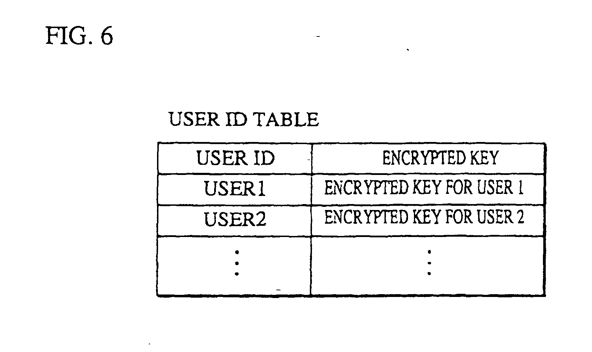

(1) The password registration unit 100 may further receive an input of a user identifier (user ID) that identifies the user, and write the encrypted key, in association with the user identifier, into a user ID table in the storage unit 400. Fig. 6 shows an example of the user ID table. The user ID table has an area for storing a plurality of pairs each composed of an user ID and an encrypted key. In this case, the file decryption unit 30C receives an input of a user ID, and then decrypts an encrypted key that is associated with the input user ID in the user ID table.

With this construction, a plurality of users can use the file management apparatus 10.

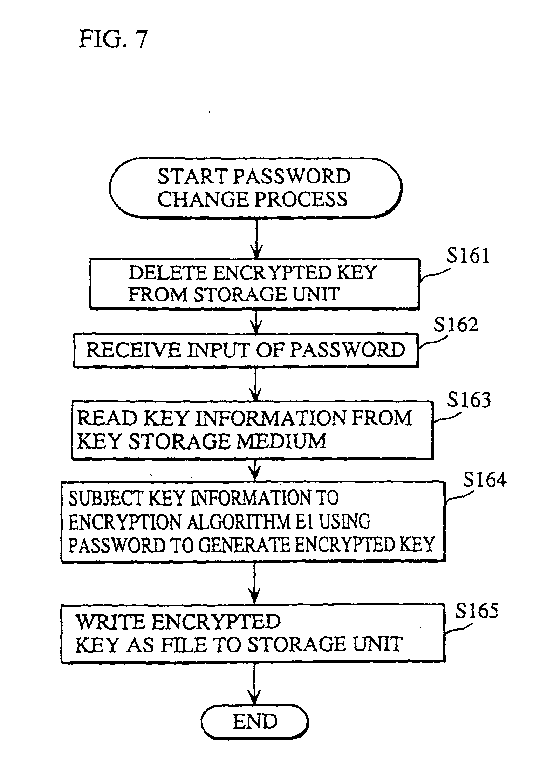

(2) The following is an explanation of the operation of the file management apparatus 10 when a password is changed, with reference to a flowchart shown in Fig. 7.

The file management apparatus 10 further includes a deletion unit for deleting the encrypted key stored in the storage unit 400 (step S161).

The password input unit 101 in the password registration unit 100 receives an input of a new password from the user, and outputs the received new password to the encryption unit 102 (step S162). The encryption unit 102 then reads key information from the storage area of the key storage medium 20 (step S163), subjects the read key information to the encryption algorithm E1 using the new password as a key, to obtain a new encrypted key (step S164), and writes the generated new encrypted key as a file to the storage unit 400 (step S165).

In the above described way, a new encrypted key is generated when the password is changed.

(3) For preventing encrypted information from being decrypted using a password, the only thing to do is to delete the encrypted key that has been encrypted using the password.

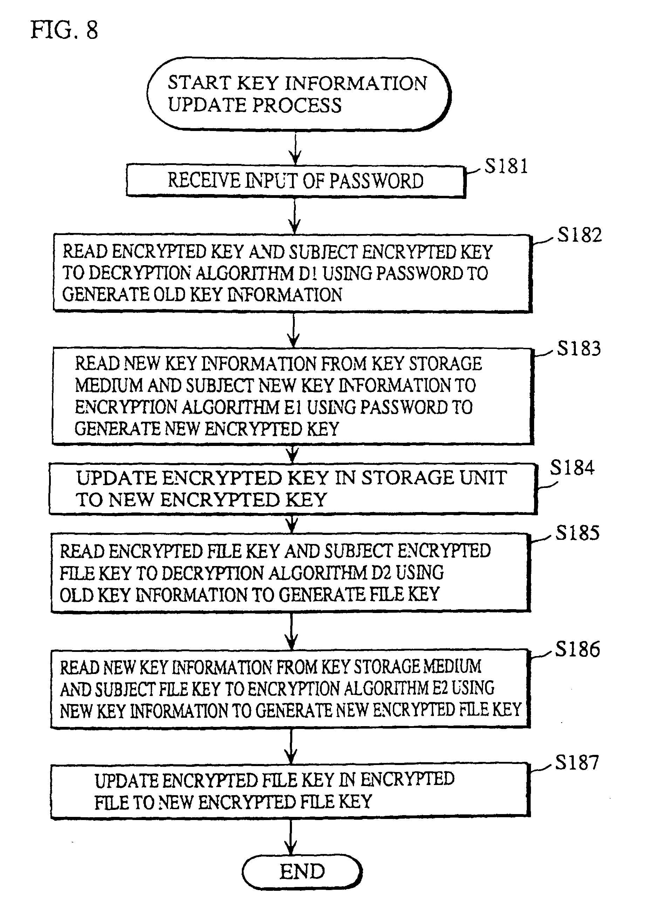

(4) The following is an explanation of the operation of the file management apparatus 10 when key information is updated, with reference to a flowchart shown in Fig. 8.

The key storage medium 20 stores new key information beforehand, instead of the key information employed previously (referred to as old key information).

The password input unit 101 receives an input of a password that is the same as the password received previously (step S181). The encryption unit 102 subjects the encrypted key (hereafter referred to as the old encrypted key) to the decryption algorithm D1 using the received password as a key to generate key information that is the same as the old key information (step S182), reads the new key information from the key storage medium 20, subjects the read new key information to the encryption algorithm E1 using the password as a key to generate a new encrypted key (step S183), and updates the old encrypted key stored in the storage unit 400 to the generated new encrypted key (step S184).

The file encryption unit 200 then reads the encrypted file key generated previously (hereafter referred to as the old encrypted file key) from the storage unit 400, and subjects the old encrypted file key to the decryption algorithm D2 using the old key information as a key, to generate a file key (step S185), reads the new key information from the key storage medium 20, subjects the file key to the encryption algorithm E2 using the new key information as a key to generate a new encrypted file key (step S186), and updates the old encrypted file key in the encrypted file to the new encrypted file key (step S187).

In this way, for updating key information, the key information before being updated is first obtained using the old encrypted key and the password. An encrypted file key included in the header is then decrypted using the old key information to obtain a file key. Following this, the file key is encrypted using the new key information, and the encrypted file key is updated. Here, the encrypted key is updated, too.

Note in the present embodiment, when key information is lost, the key information cannot be made temporarily invalid.

(5) When encrypting a plaintext, the file encryption unit 200 may add encryption information to the header part of the encrypted file, the encryption information indicating that the plaintext has been encrypted. In this case, when key information is updated, the file encryption unit 200 may retrieve the encrypted file key in the encrypted file 404 to whose header the encryption information has been added, and generate a file key from the retrieved encrypted file key.

Also, the password registration unit 100 may receive an input of a user ID that identifies the user, and the file encryption unit 200 may additionally write the user ID to the encrypted file that includes the ciphertext and the encrypted file key. In this case, when key information is updated, the file encryption unit 200 may retrieve the encrypted file key in the encrypted file to which the user 13 has been added, and generate a file key from the retrieved encrypted file key.

Also, the file encryption unit 200 may write the user ID and a file identifier that identifies the encrypted file including the ciphertext and the encrypted file key, in association with each other, as a unified file, to the storage unit 400. In this case, the file encryption unit 200 may extract the file identifier that is associated with the user ID from the unified file, identify the encrypted file key included in the file identified by the extracted file identifier, and generate a file key from the identified encrypted file key.

Alternatively, the file encryption unit 200 may write (a) encryption information indicating that the plaintext has been encrypted and (b) a file identifier that identifies the encrypted file including the ciphertext and the encrypted file key, in association with each other, as a unified file, to the storage unit 400. In this case, the file encryption unit 200 may extract the file identifier that is associated with the encryption information from the unified file, identify the encrypted file key included in the file identified by the extracted file identifier, and generate a file key from the identified encrypted file key.

(6) In the above embodiment, the encrypted key is stored in one computer system, and so decryption of a ciphertext using a password is made only possible within the computer system. To enable the decryption of the ciphertext using the password in another computer system, the encrypted key may be stored in a portable storage medium, and may be inputted into the other computer system.

Here, the password registration unit 100 in the computer system writes the encrypted key to a portable storage medium such as a SD memory card. Also, the user writes the encrypted file to another portable storage medium. The user then loads the portable storage medium to which the encrypted key has been written, and the portable storage medium to which the encrypted file has been written, on the other computer system, so that a file decryption unit in the other computer system reads the encrypted key from the portable storage medium, decrypts the read encrypted key, and also, reads the encrypted file from the portable storage medium, and decrypts the read encrypted file.

It should be noted here that the encrypted key and the encrypted file may be written to one portable storage medium as separate files.

(7) The password registration unit 100 may read key information from the key storage medium 20, subject the read key information to a hash algorithm to generate first authentication information, and write the generated first authentication information in association with the encrypted key, to the storage unit 400. In this case, the file decryption unit 300 may read the encrypted key and the first authentication information from the storage unit 400, decrypt the encrypted key to generate key information, and subject the generated key information to the hash algorithm that was used in the above encryption, to generate second authentication information. Following this, the file decryption unit 300 may compare the first authentication information and the second authentication information to see if they match. If they do not match, the encrypted key is judged to have been altered, or if they match, the encrypted key is judged not to have been altered.

The file encryption unit 200 may also generate first authentication information from a file key in the same way as described above, and writes the generated first authentication information in association with the encrypted file key, to the storage unit 400. The file decryption unit 300 may read the first authentication information and the file key, generate second authentication information from the read file key in the same way as described above, and compare the read first authentication information with the generated second authentication information, to detect an alteration of the file key if any. Also, an alteration of a plaintext can be detected in the same manner as described above.

(8) The password registration unit 100 may write the key information and the encrypted key, in association with each other, as one file to the storage unit 400.

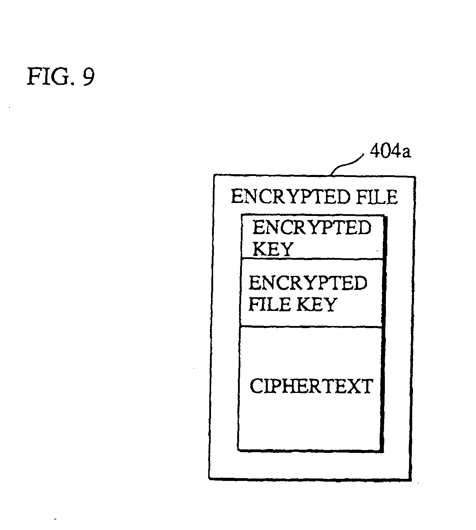

As one example shown in Fig. 9, the file encryption unit 200 writes the encrypted key and the encrypted file key to the header part of the encrypted file 404a, and the ciphertext to the data part of the encrypted file 404a in the storage unit 400b. In this case, the file decryption unit 300 reads the encrypted key from the header part of the encrypted file 404a, instead of reading the encrypted key from the file 403 in the storage unit 400.

By storing the encrypted key to a header part of each encrypted file, a ciphertext stored therein can be decrypted only using a password if the encrypted file is transferred to another computer. It should be noted here, however, when the password is changed, the encrypted key in the header part of each concerned encrypted file needs to be updated. Also, storing the encrypted key and the key information required for encrypting a plaintext into one storage medium serves as convenient.

(9) The file encryption unit 200 may further receive an input of a user indication, the user indication showing whether an encrypted key and a ciphertext are to be stored in association with each other into one encrypted file. When the indication shows that the encrypted key and the ciphertext are to be stored in association with each other into one encrypted file, the file encryption unit 200 writes the encrypted key to the header part of the encrypted file, and the ciphertext to the data part of the encrypted file.

It should be noted here that an encrypted file that does not store an encrypted key cannot be decrypted only with a password unless the encrypted key is stored separately.

### (10) The password registration unit 100 may write the generated encrypted key to the key storage medium 20 instead of to the storage unit 400.

### 2. Second Embodiment

The following is an explanation of a file management apparatus 10b relating to a second embodiment of the present invention.

The file management apparatus 10b is a computer system on which the key storage medium 20 is loaded, as the file management apparatus 10.

### 2.1 Constructions of the File Management Apparatus 10b and the Key Storage Medium 20

The following is an explanation of the constructions of the file management apparatus 10b and the key storage medium 20.

The file management apparatus 10b includes a password registration unit 100b, a file encryption unit 200b, a file decryption unit 300b, and a storage unit 400b, and the key storage medium 20 is connected to the file management apparatus 10b as shown in Fig. 10.

The password registration unit 100b includes a password input unit 101b and an encryption unit 102b. The file encryption unit 200b includes a file key generation unit 201b, an encryption unit 202b, an encryption unit 203b, an encryption unit 204b, and a decryption unit 205b, The file decryption unit 300b includes a password input unit 301b, a decryption unit 302b, a switch unit 303b, a decryption unit 304b, and a decryption unit 305b. The following explanation focuses on the differences from the construction of the file management apparatus 10.

### (1) Storage Unit 400b

The storage unit 400b, as the storage unit 400, stores a plaintext file 401b beforehand, the plaintext file 401b storing a plaintext.

### (2) Password Input Unit 101b

The password input unit 101b, as the password input unit 101, receives an input of a password, and outputs the received password to the encryption unit 102b.

### (3) Encryption Unit 102b

The encryption unit 102b, as the encryption unit 102, reads key information from the key storage medium 20,subj ects the password received from the password input unit 101b to the encryption algorithm E1 using the read key information to generate an encrypted password, and writes the generated encrypted password as a file, to the storage unit 400b.

### (4) File Key Generation Unit 201b

The file key generation unit 201b, as the file key generation unit 201, generates a file key, and outputs the generated file key to the encryption unit 202b, the encryption unit 203b, and the encryption unit 204b.

### (5) Decryption Unit 205b

The decryption unit 205b reads the encrypted password stored in the storage unit 400b, and reads the key information from the key storage medium 20. The decryption unit 205b then subjects the read encrypted password to the decryption algorithm D1 using the read key information to generate a password, and outputs the generated password to the Encryption unit 202b.

### (6) Encryption Unit 203b

The encryption unit 203b, as the encryption unit 203, reads the plaintext file 401b from the storage unit 400b, and receives the file key from the file key generation unit 201b.

The encryption unit 203b then subjects a plaintext included in the plaintext file 401b to the encryption algorithm E3 using the received file key as a key to generate a ciphertext, and writes an encrypted file 404b including the generated ciphertext in the data part thereof, tc the storage unit 400.

### (7) Encryption Unit 202b

The encryption unit 202b receives the password from the decryption unit 205b and the file key from the file key generation unit 201b. The encryption unit 202b then subjects the received file key to the encryption algorithm E2 using the received password as a key to generate a first encrypted file key, and writes the generated first encrypted file key to the header part of the encrypted file 404b in the storage unit 400b.

### (8) Encryption Unit 204b

The encryption unit 204b reads the key information from the key storage medium 20, receives the file key from the file key generation unit 201b. The encryption unit 204b then subjects the file key to the encryption algorithm E4 using the read key information as a key to generate a second encrypted file key, and writes the generated second encrypted file key to the header part of the encrypted file 404b in the storage unit 400b. It should be noted here that the encryption algorithm E4 complies with DES.

### (9) Switch Unit 303b

The switch unit 303b receives an input of either a first type or a second type from the user. The first type indicates to decrypt a ciphertext using a password, and the second type indicates to decrypt a ciphertext using key information.

When the input of the first type is received, the switch unit 303b receives the file key from the decryption unit 302b, and outputs the received file key to the decryption unit 305b. When the input of the second type is received, the switch unit 303b receives the file key from the decryption unit 304b, and outputs the received file key to the decryption unit 305b.

### (10) Password Input Unit 301b

The password input unit 301b, as the password input unit 101, receives an input of a password from the user, and outputs the received password to the decryption unit 302b.

### (11) Decryption Unit 302b

The decryption unit 302b receives the password from the password input unit 301b, reads the first encrypted file key included in the header part of the encrypted file 404b in the storage unit 400b. The decryption unit 302b then subjects the read first encrypted file key to the decryption algorithm D2 using the read password as a key to generate a file key, and outputs the generated file key to the switch unit 303b.

### (12) Decryption Unit 304b

The decryption unit 304b reads the key information from the key storage medium 20, reads the second encrypted file key included in the header part of the encrypted file 404 in the storage unit 400b, and subjects the read second encrypted file key to the decryption algorithm D4 using the read key information as a key to generate a fie key. Here, the decryption algorithm D4 complies with DES, and is to perform the inverse conversion to the encryption algorithm E4.

The decryption unit 304b outputs the generated file key to the switch unit 303b.

### (13) Decryption Unit 305b

The decryption unit 305b receives the file key from the decryption unit 304b, reads a ciphertext included in the data part of the encrypted file 404b in the storage unit 400, and subjects the read ciphertext to the decryption algorithm D3 using the received file key as a key to generate a decrypted text. The decryption unit 305b writes a decrypted text file 402b including the generated decrypted text to the storage unit 400.

### 2.2 Operation of the File Management Apparatus 100b

The following is an explanation of the operation of the file management apparatus 10b.

### (1) Operation of the Password Registration Unit 100b

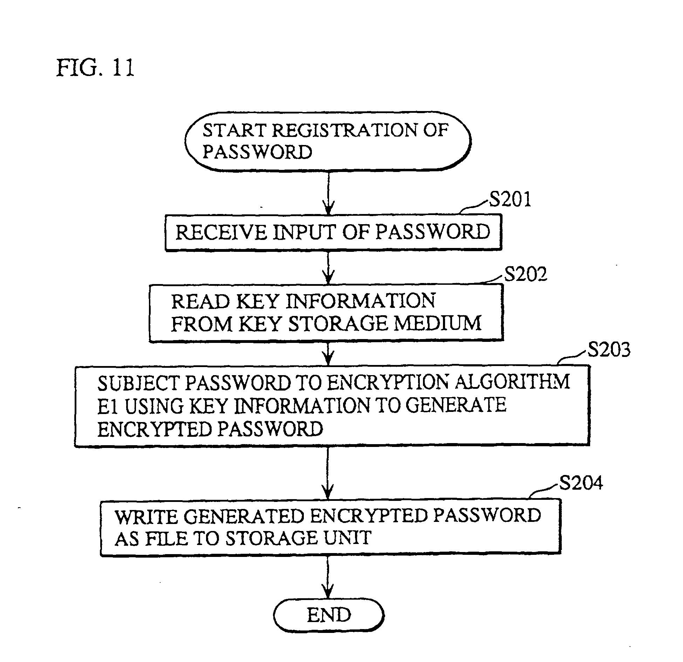

The following is an explanation of the operation of the password registration unit 100b, with reference to a flowchart shown in Fig. 11.

The password input unit 101b receives an input of a password from the user, and outputs the received password to the encryption unit 102b (step S201).

The encryption unit 102b then reads key information from the storage area of the key storage medium 20 (step S202), subjects the password to the encryption algorithm E1 using the key information as a key to generate an encrypted password (step S203), and writes the generated encrypted password as a file, to the storage unit 400b (step S204).

### (2) Operation of the File Encryption Unit 200b

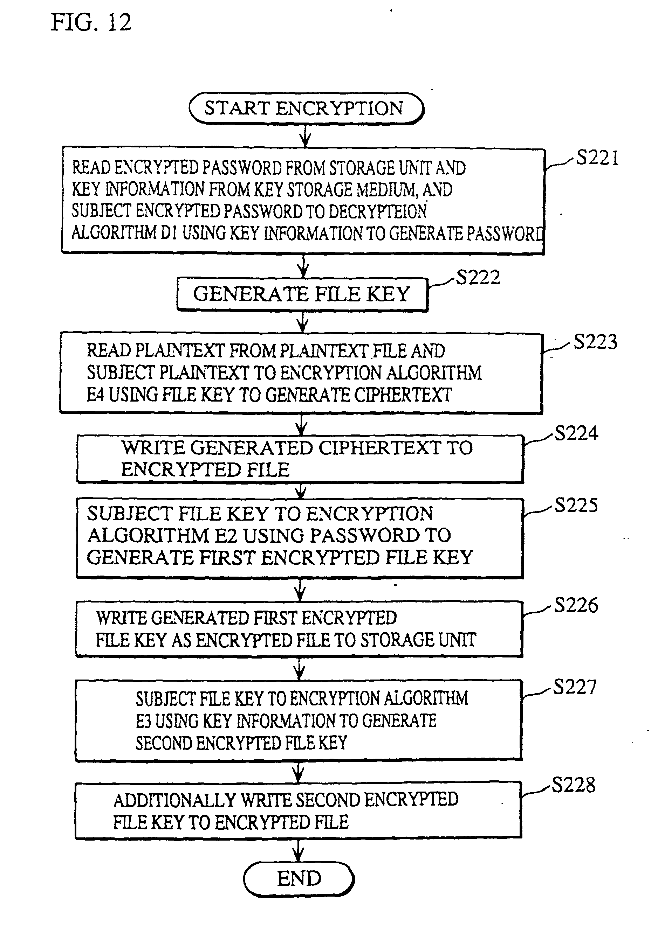

The following is an explanation of the operation of the file encryption unit 200b, with reference to a flowchart shown in Fig. 12.

The decryption unit 205b reads an encrypted password stored in the storage unit 400b, reads key information from the key storage medium 20, subjects the read encrypted pas sword to the decryption algorithm D1 using the read key information to generate a password, and writes the generated password to the encryption unit 202b (step S221).

Following this, the file key generation unit 201b generates a file key (step S222).

The encryption unit 203b then reads the plaintext file 401b from the storage unit 400b, subjects a plaintext included in the plaintext file 401b to the encryption algorithm E3 using the file key as a key to generate a ciphertext (step S223), and writes the encrypted file 404b including the generated ciphertext in the data part thereof, to the storage unit 400b (step S224).

Following this, the encryption unit 202b receives the password and the file key, and subjects the file key to the encryption algorithm E2 using the password as a key to generate a first encrypted file key (step S225), and writes the generated first encrypted file key to the header part of the encrypted file 404b in the storage unit 400b (step S226).

Following this, the encryption unit 204b receives the file key and the key information, subjects the file key to the encryption algorithm E4 using the key information as a key to generate a second encrypted file key (step S227), and writes the generated second encrypted file key to the header part of the encrypted file 404b in the storage unit 400b (step S228).

### (3) Operation of the File Decryption Unit 300b

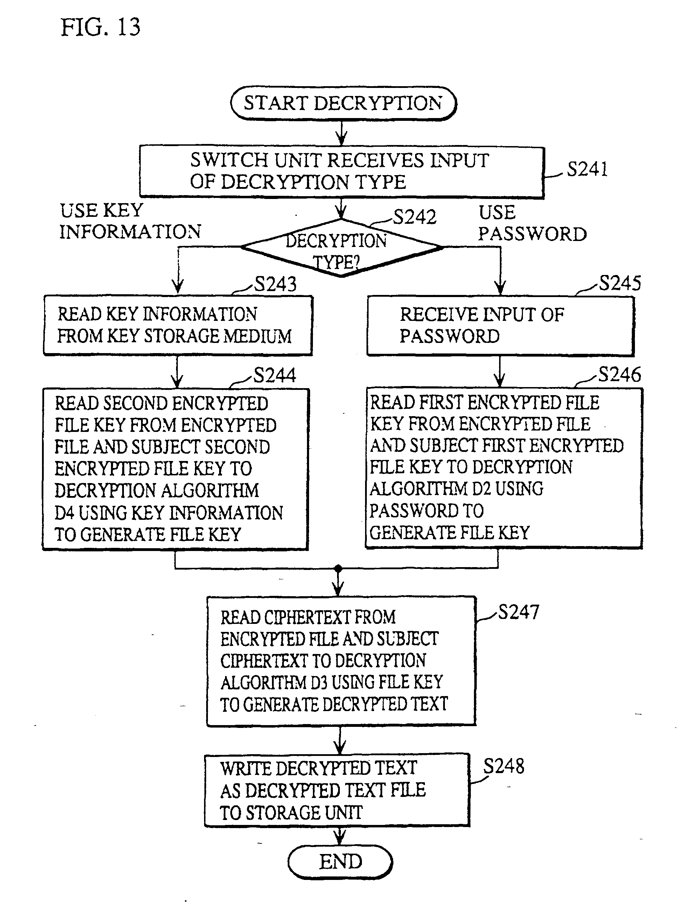

The following is an explanation of the operation of the file decryption unit 300b, with reference to a flowchart shown in Fig. 13.

The switch unit 303b receives an input of either the first type or the second type from the user (step S241).

When the switch unit 303b receives the input of the first type (step S242), the password input unit 301b receives an input of a password from the user and outputs the received password to the decryption unit 302b (step S245). The decryption unit 302b reads a first encrypted file key from the storage unit 400b, subjects the read first encrypted file key to the decryption algorithm D2 using the password as a key to generate a file key, and outputs the generated file key to the decryption unit 305b via the switch unit 303b (step S246).

When the switch unit 303b receives the input of the second type (step S242), the decryption unit 304b reads key information from the key storage medium 20 (step S243), reads a second encrypted file key from the storage unit 400b, subjects the read second encrypted file key to the decryption algorithm D4 using the key information as a key to generate a file key, and outputs the file key to the decryption unit 305b via the switch unit 303b (step S244).

Following this, the decryption unit 305b reads a ciphertext included in the data part of the encrypted file 404b in the storage unit 400b, and subjects the read ciphertext to the decryption algorithm D3 using the file key as a key to generate a decrypted text (step S247), and writes a decrypted text file 402b including the generated decrypted text, to the storage unit 400b (step S248).

### 2.3 Conclusions

The file management apparatus 10b has the three functions : password registration; plaintext encryption; and ciphertext decryption.

For registering a password, the user loads the key storage medium storing key information beforehand, on the file management apparatus 10b, and inputs a password to be registered. The password registration unit 100b encrypts the input password using the key information, and stores the generated encrypted password in the computer system. In the second embodiment, information to be encrypted and a key used in the encryption are reversed as compared with those in the first embodiment.

For encrypting a plaintext, the user first loads the key storage medium on the computer system in which the encrypted password is present, and designates a file to be encrypted. The file encryption unit 200b first decrypts the encrypted password using the key information so as to obtain a password. Following this, the file encryption unit 200b encrypts a generated file key using the password, to generate a first encrypted file key. Also, the file encryption unit 200b encrypts the file key using the key information to generate a second encrypted file key. The file encryption unit 200b then encrypts information stored in the file using the file key to generate a ciphertext, and writes an encrypted file including the first encrypted file key and the second encrypted file key in the header part thereof, and the ciphertext in the data part thereof, to the storage unit 400b.

For decrypting a ciphertext, there are two methods, one using key information and the other using a password. When using key information, the file decryption unit 300b decrypts the second encrypted file key acquired from the header part of the encrypted file 404b using the key information, to obtain a file key. The file decryption unit 300b then decrypts the ciphertext using the obtained file key as a key. When using a password, the file decryption unit 300b receives an input of the password from the user, decrypts the first encrypted file key using the received password to obtain a file key, and decrypts the ciphertext using the file key as a key to obtain the original plaintext. 2.4 Modification

Although the present invention has been described based on the second embodiment, the invention should not be limited to such. For instance, the file management apparatus 10b may be constructed according to the following modifications.

(1) The password registration unit 100b may further receive an input of a user ID that identifies the user, and store the encrypted password in association with the user ID, in a specific computer system. In this case, the file decryption unit 200b receives an input of a user ID, and then decrypts an encrypted password that is associated with the input user ID.

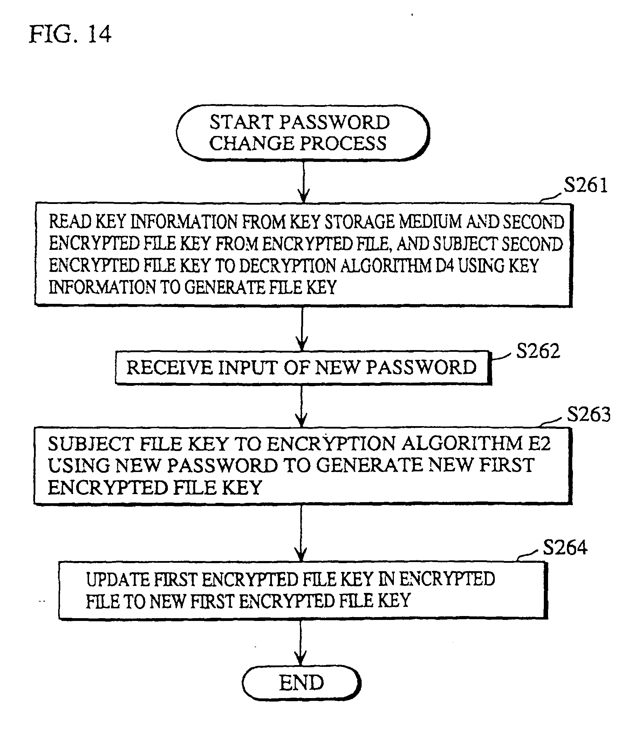

(2) The following is an explanation of the operation of the file management apparatus 10b when a password is changed, with reference to a flowchart shown in Fig. 14.

The password registration unit 100b reads key information from the key storage medium 20, reads a second encrypted file key from the encrypted file 404b, and subjects the second encrypted file key to the decryption algorithm D4 using the key information as a key to generate a file key (step S261). Following this, the password registration unit 100b receives an input of a new password from the user (step S262), subjects the generated file key to the encryption algorithm E2 using the new password as a key to generate a new first encrypted file key (step S263), and updates the first encrypted file key in the encrypted file 404b to the new first encrypted file key (step S264).

(3) For preventing encrypted information from being decrypted using a password, the file management apparatus 10b deletes the first encrypted file key in the encrypted file 404b. In this case, decryption using key information is available.

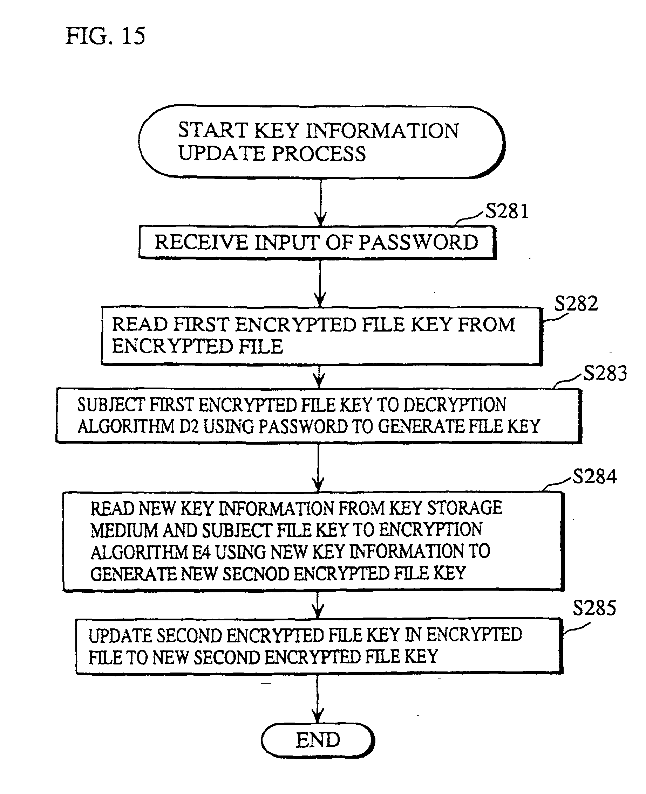

(4) The following is an explanation of the operation of the file management apparatus 10b when key information is updated, with reference to a flowchart shown in Fig. 15.

The key storage medium stores new key information beforehand, instead of the key information employed previously (referred to as old key information).

The file encryption unit 200b receives an input of a password that is the same as the password received previously (step S281), reads a first encrypted file key from the encrypted file 404b (step S282), and subjects the first encrypted file key to the decryption algorithm D2 using the received password as a key to generate a file key (step S283). Following this, the file encryption unit 200b reads the new key information from the key storage medium, subjects the file key to the encryption algorithm E4 using the new key information as a key to generate a new second encrypted file key (step S284), and updates the second encrypted file key in the encrypted file 404b to the new second encrypted file key (step S285).

(5) In the above embodiment, the encrypted password is stored in a computer system in which a plaintext has been encrypted to generate a ciphertext, and so decryption of the ciphertext using a password is made only possible within the computer system. To enable the decryption of the ciphertext using the password in another computer system, the encrypted key may be stored in a portable storage medium, and inputted into the other computer system.

Here, the password registration unit 100b in the computer system writes the encrypted password to a portable storage medium such as a SD memory card. Also, the user writes the encrypted file to another portable storage medium. The user then loads the portable storage medium to which the encrypted key has been written, and the portable storage medium to which the encrypted file has been written, on the other computer system, so that a file decryption unit in the other computer system reads the encrypted key from the portable storage medium, decrypts the read encrypted key, and also, reads the encrypted file from the portable storage medium, and decrypts the read encrypted file.

It should be noted here that the encrypted key and the encrypted file may be written to one portable storage medium as separate files.

(6) When encrypting a plaintext to generate a ciphertext, the file encryption unit 200b may add various information to the header part of the encrypted file, the various information including encryption information indicating that the plaintext has been encrypted, and a user ID for the key information. In this case, when key information or a password is updated, the file encryption unit 200b may retrieve the encrypted file with reference to the additional information, such as encryption information indicating that the plaintext has been encrypted and a user ID for the key information, in procedures described in the items (2) or (4). Instead of writing such additional information to the header part of each encrypted file, the file encryption unit 200b may write such additional information for each encrypted file, to one unified file. In this case, the file encryption unit 200b retrieves each concerned encrypted file from the unified file in procedures described in the items (2) or (4).

(7) When encrypting a plaintext to generate a ciphertext, the file encryption unit 200b may further receive an input of a user indication, and determine whether to store a first encrypted file key into the header part of the encrypted file, according to the content of the user indication. When the first encrypted file key is determined to be stored, it is stored in the header part of the encrypted file as described above. When the encrypted file key is determined not to be stored, neither generation nor storing of the first encrypted file key is performed. When the first encrypted file key is stored in the encrypted file, the ciphertext can be decrypted using a password. When the first encrypted file key is not stored in the encrypted file, the ciphertext is prohibited from being decrypted using a password.

(8) For prohibiting a ciphertext from being decrypted using key information in a case where the user loses the key information, the file management apparatus 10b deletes a second encrypted file key. This can prevent unauthorized users from decrypting encrypted information by acquiring the lost key information. In this way, the key information can be made temporarily invalid in the second embodiment, which is impossible in the first embodiment. In this case, decryption using a password is available.

Furthermore, according to the construction described in the item (4), the encrypted information can be decrypted using a password. Therefore, the user is allowed to have access to encrypted files without any inconvenience until new key information is issued. Also, when the new key information is issued, the only thing to do is to update the header part of each concerned encrypted file, so that decryption of each encrypted file using the new key information thereafter becomes possible.

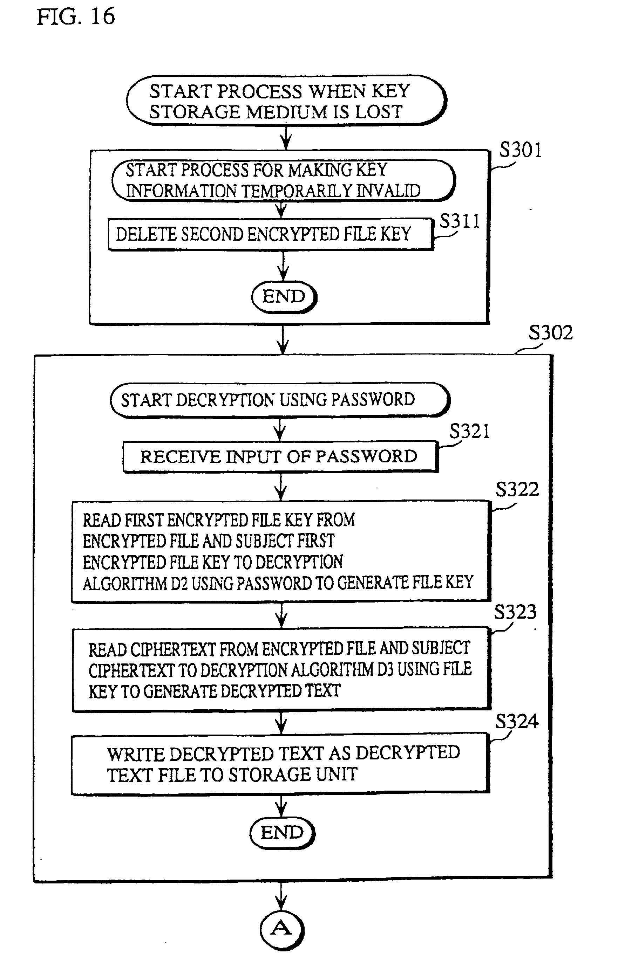

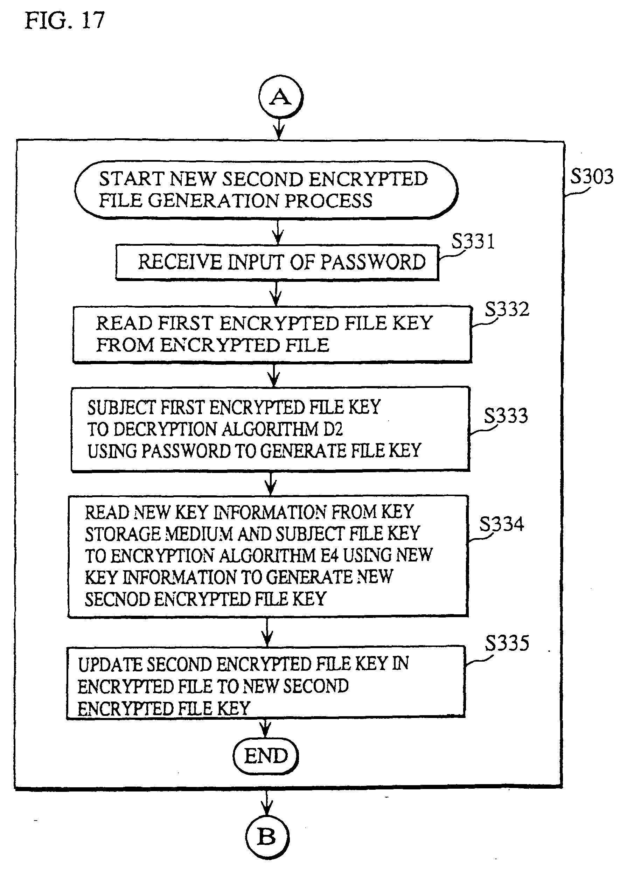

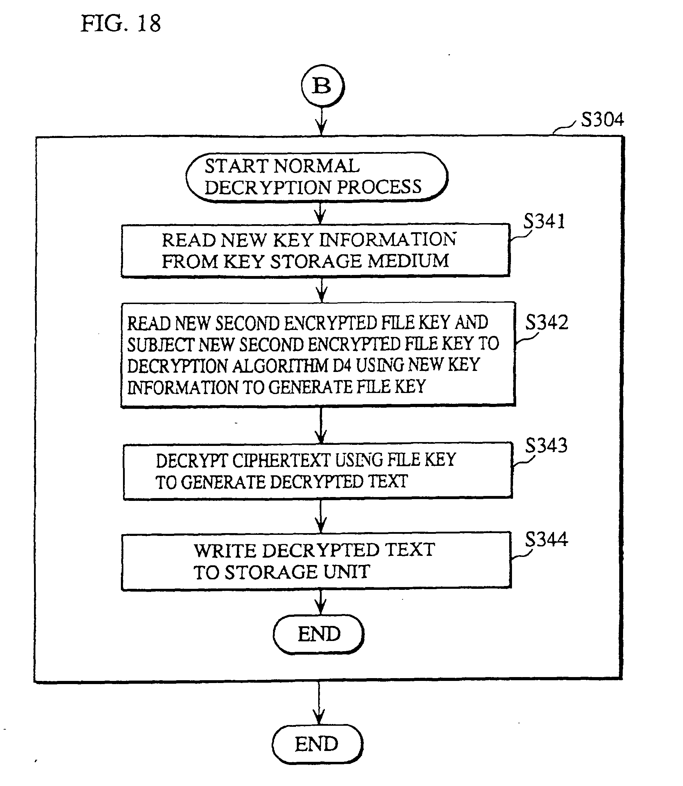

The following is an explanation of operations when the user loses the key storage medium, with reference to flowcharts shown in Figs. 16 to 18.

As shown in these flowcharts, key information is made temporarily invalid when the user loses the key storage medium (step S301). When the user intends to decrypt a ciphertext while the key information is being invalid, a decryption process using a password is performed (step S302).

Next, new key information is issued. When the user is provided with a key storage medium storing the new key information, a new second encrypted file key is generated (step S303), and a normal decryption process is performed using the new key information (step S304).

The following explains detailed processes performed in steps S301 to S304.

In the process for making the key information temporarily invalid in Step S301, the file management apparatus 10b deletes the second encrypted file key (step S311).

In the decryption process using a password in step S302, the password input unit 301b receives an input of a password from the user (step S321), the decryption unit 302b reads the first encrypted file key from the storage unit 400b, subjects the read first encrypted file key to the decryption algorithm D2 using the password as a key to generate a file key, and outputs the generated file key to the decryption unit 305b via the switch unit 303b (step S322). Following this, the decryption unit 305b reads a ciphertext included in the data part of the encrypted file 404b in the storage unit 400b, and subjects the read ciphertext to the decryption algorithm D3 using the file key as a key to generate a decrypted text (step S323). The decryption unit 305b then writes the decrypted text file 402b including the generated decrypted text to the storage unit 400b (step S324).

In the new second encrypted file key generation process in step S303, the file encryption unit 200b receives an input of a password that is the same as the password received previously (step S331), reads the first encrypted file key from the encrypted file 404b (step S332), and subjects the first encrypted file key to the decryption algorithm D2 using the password as a key to generate a file key (step S333). Following this, the file encryption unit 200b reads new key information from the key storage medium, subjects the file key to the encryption algorithm E4 using the new key information as a key to generate a new second encrypted file key (step S334), and updates the second encrypted file key in the encrypted file 404b to the generated new second encrypted file key (step S335).

In the normal decryption process using the new key information in step S304, the decryption unit 304b reads the new key information from the key storage medium (step S341) and the new second encrypted file key from the storage unit 400b, subjects the read new second encrypted file key to the decryption algorithm D4 using the new key information as a key to generate a file key, and outputs the generated file key to the decryption unit 305b via the switch unit 303b (step S342). Following this, the decryption unit 305b reads a ciphertext included in the data part of the encrypted file 404b in the storage unit 400b, subjects the read ciphertext to the decryption algorithm D3 using the file key as a key to generate a decrypted text (step S343), and writes the decrypted text file 402b including the generated decrypted text to the storage unit 400b (step S344).

### (9) The file decryption unit 300b may require both key information and a password for decrypting a ciphertext.

Also, a first encrypted file key and a second encrypted file key each may be decrypted using both a password and key information, to generate two file keys, and an alteration in the header part of the encrypted file may be detected by judging whether the generated two file keys match or not.

(10) As in the first embodiment, authentication information may be added to an encrypted password, a first encrypted file key, a second encrypted file key, and a ciphertext, so that the authentication information can be utilized for detecting an alteration of each of the encrypted password, the first encrypted file key, the second encrypted file key, and the ciphertext.

### 3. Conclusions

According to the present invention as described above, encryption and decryption of a file using key information accompanying a computer becomes possible. In addition, decryption of the file only using a password that has been registered beforehand and stored securely in the computer is possible if indicated at the time of the encryption. The password does not need to be set each time a file is encrypted. Also, the present invention provides structures for making decryption using a password temporarily invalid, or easily changing the password, in case the user forgets the password. Also, the present invention further provides structures for making key information temporarily invalid in case the user loses the key information. When new key information is issued, a file that has encrypted with the lost key information can be decrypted using the new key information merely by updating the header part of the encrypted file. Also, by storing an ID for key information or for a password in a header part of each encrypted file or in a unified management file, each encrypted file that requires a change in accordance with updating key information or a password can be retrieved.

As described above, the present invention provides a file encryption/decryption system that satisfies the following conditions.
(1) Encryption of a file is performed using key information stored in a storage medium such as an IC card. Once a password is registered beforehand, it is not necessary to input a password every time encryption is performed.
(2) Decryption of a file is normally performed using the key information. Also, the decryption of the file using the password registered beforehand is made possible by a user indication at the time when the file is encrypted.
(3) The system comprises a structure allowing a password to be changed easily.
(4) The system comprises a structure that makes key information temporarily invalid when the key information is lost, a structure allowing, when new key information is issued, an encrypted file that has been encrypted using the key information, to be handled with the new key information, and a structure that easily retrieves an encrypted file to be changed due to the change of the key information.

### 4. Other Modifications

Although the present invention has been described based on the above embodiments, the invention should not be limited to such. For example, the following modifications are possible.
(1) In the above embodiments, DES is employed as the decryption/encryption algorithm. However, other decryption/encryption algorithms may instead be employed.
(2) The present invention also applies to the method used by the apparatuses described above. This method may be realized by computer programs that are executed by computers. Such computer programs may be distributed as digital signals .

Also, the present invention may be realized by a computer-readable storage medium, such as a floppy disk, a hard disk, a CD-ROM (Compact Disc-Read Only Memory), an MO (Magneto-Optical) disc, a DVD (Digital Versatile Disc), a DVD-ROM, a DVD-RAM, or a semiconductor memory, on which computer programs and/or digital signals mentioned above are recorded. Conversely, the present invention may also be realized by a computer program and/or digital signal that is recorded on a storage medium.

Computer program or digital signals that achieve the present invention may also be transmitted via a network, such as an electric communication network, a wired or wireless communication network, or the Internet.

Also, the above embodiments of the present invention can be realized by a computer system that includes a microprocessor and a memory. In this case, a computer program can be stored in the memory, with the microprocessor operating in accordance with the computer program.

The computer programs and/or digital signals may be provided on an independent computer system by distributing a storage medium on which the computer programs and/or digital signals are recorded, or by transmitting the computer programs and/or digital signals via a network. The independent computer may then execute the computer programs and/or digital signals to function as the present invention.

(3) The limitations described in the embodiment and the modifications may be freely combined.

Although the present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

## Claims

1. A file decryption apparatus that stores a ciphertext and a first encrypted file key generated by a file encryption apparatus, the file encryption apparatus for receiving an input of a password and for encrypting key information from a key storage medium (20) using the received password to generate an encrypted key, or for encrypting the received password using the key information to generate an encrypted password, and writing the generated encrypted key or the generated encrypted password to a memory unit (400) and for encrypting a plaintext using a file key to generate a ciphertext, encrypting the file key using the key information to generate a first encrypted file key, and writing the ciphertext in association with the encrypted file key, to the memory unit (400) thereof, the file decryption apparatus comprising:
a key storage medium (20) storing the key information beforehand;
decryption means (300,300b) for decrypting the ciphertext using a file key to generate a decrypted text;
**characterised by**
switch means (303,303b) for switching between (a) decrypting the first encrypted file key on the basis of the password, and (b) decrypting the first encrypted file key on the basis of the key information from the key storage medium, to generate the file key.

2. A file management apparatus comprising:
a file encryption apparatus that encrypts a plaintext to generate a ciphertext and stores the ciphertext into a memory unit (400) thereof, the file encryption apparatus comprising:
a key storage medium (20) storing key information beforehand;
registration means (100) for receiving an input of a password and for encrypting the key information using the received password to generate an encrypted key and writing the generated encrypted key to the memory unit; and
encryption means (200) for encrypting a plaintext using a file key to generate a ciphertext, encrypting the file key using the key information to generate the first encrypted file key, and writing the ciphertext in association with the encrypted file key, to the memory unit, and further comprising:
the file decryption apparatus of claim 1,
wherein the registration means further receives an input of a user identifier that identifies a user, and writes the user identifier in association with the encrypted key, to the memory unit,
the switch means
(a) includes first key obtaining means for receiving an input of the password and decrypting the encrypted key using the received password to generate the key information, and second key obtaining means for reading the key information from the key storage medium, and
(b) obtains the key information by one of the first key obtaining means and the second key obtaining means, and
the decryption means decrypts the encrypted file key using the obtained key information to generate a file key, and decrypts the ciphertext using the file key to generate a decrypted text, wherein
the first key obtaining means further receives an input of the user identifier and decrypts the encrypted key that is associated with the user identifier.

3. The file management apparatus of claim 2,
wherein the registration means further writes the key information and/or authentication information in association with the encrypted key, to the memory unit,
the encryption means further writes the encrypted key, the key information, and/or authentication information in association with the ciphertext, to the memory unit,
the first key obtaining means checks, using the authentication information, whether the encrypted key has been altered or not, when the encrypted key that is associated with the authentication information is decrypted, and
the decryption means checks, using the authentication information, whether the ciphertext has been altered or not, when the ciphertext that is associated with the authentication information is decrypted.

4. The file management apparatus of claim 3,
wherein the registration means writes the encrypted key to the memory unit that is a portable storage medium, and
the first key obtaining means decrypts the encrypted key that has been written to the memory unit that is the portable storage medium.

5. The file management apparatus of claim 2, further comprising
deletion means for deleting the encrypted key that has been written to the memory unit.

6. The file management apparatus of claim 2, further comprising
deletion means for deleting the encrypted key that has been written to the memory unit,
wherein the registration means further receives an input of a new password, encrypts the key information using the new password to generate a new encrypted key, and writes the generated new encrypted key to the memory unit.

7. The file management apparatus of claim 2,
wherein the key storage medium stores new key information beforehand, instead of the key information,
the registration means receives the input of the password and decrypts the encrypted key using the password to generate key information,
the encryption means decrypts the encrypted file key using the key information to generate a file key, encrypts the file key using the new key information to generate a new encrypted file key, and writes the new encrypted file key over the encrypted file key in the memory unit, and
the registration means encrypts the new key information using the password to generate a new encrypted key and writes the new encrypted key over the encrypted key in the memory unit.

8. The file management apparatus of claim 7,
wherein the registration means further receives an input of a user identifier that identifies a user,
the encryption means further writes the user identifier in association with the ciphertext and the encrypted file key, to the memory unit, and
the encryption means retrieves the encrypted file key that is associated with the user identifier in the memory unit and generates a file key from the retrieved encrypted file key.

9. The file management apparatus of claim 7,
wherein the encryption means further writes encryption information in association with the ciphertext and the encrypted file key, to the memory unit, the encryption information indicating that the plaintext has been encrypted, and
the encryption means retrieves the encrypted file key that is associated with the encryption information in the memory unit, and generates a file key from the retrieved encrypted file key.

10. The file management apparatus of claim 7,
wherein the registration means further receives an input of a user identifier that identifies a user,
the encryption means further writes the user identifier in association with a file identifier that identifies the ciphertext and the encrypted file key, as a unified file, to the memory unit, and
the encryption means extracts the file identifier that is associated with the user identifier from the unified file, specifies the encrypted file key identified by the extracted file identifier, and generates a file key from the specified encrypted file key.

11. The file management apparatus of claim 7,
wherein the encryption means further writes encryption information in association with a file identifier that identifies the ciphertext and the encrypted file key, as a unified file, to the memory unit, the encryption information indicating that the plaintext has been encrypted, and
the encryption means extracts the file identifier that is associated with the encryption information from the unified file, specifies the encrypted file key identified by the extracted file identifier, and generates a file key from the specified encrypted file key.

12. The file management apparatus of claim 2,
wherein the encryption means further writes the encrypted key in association with the ciphertext and the encrypted file key, to the memory unit, and
the first key obtaining means decrypts the encrypted key that is associated with the ciphertext and the encrypted file key.

13. The file management apparatus of claim 12,
wherein the encryption means further receives an input of an indication, the indication showing whether the encrypted key and the ciphertext are to be written in association with each other to the memory unit, and writes, when the indication shows that the encrypted key and the ciphertext are to be written in association with each other, the encrypted key in association with the ciphertext, to the memory unit.

14. The file management apparatus of claim 12,
wherein the registration means writes the generated encrypted key to the key storage medium instead of to the memory unit

15. A file management apparatus comprising:
a file encryption apparatus that encrypts a plaintext to generate a ciphertext and stores the ciphertext into a memory unit (400b) thereof, the file encryption apparatus comprising:
a key storage medium (20) storing key information beforehand;
registration means (100b) for receiving an input of a password and for encrypting the received password using the key information to generate an encrypted password, and writing the generated encrypted password to the memory unit; and
encryption means (200b) for encrypting a plaintext using a file key to generate a ciphertext, encrypting the file key using the key information to generate a first encrypted file key, and writing the ciphertext in association with the encrypted file key, to the memory unit, and further comprising:
the file decryption apparatus of claim 1,
wherein the registration means further receives an input of a user identifier that identifies a user, and writes the encrypted password in association with the user identifier, to the memory unit, and
the encryption means of the file encryption apparatus is adapted to encrypt the file key using the password to generate a second encrypted file key,
the switch means
(a) includes first key obtaining means for receiving an input of the password and decrypting the second encrypted file key using the received password, and second key obtaining means for decrypting the first encrypted file key using the key information, and
(b) obtains the file key by one of the first key obtaining means and the second key obtaining means, and
the encryption means further receives an input of the user identifier and decrypts the encrypted password that is associated with the user identifier.

16. The file management apparatus of claim 15,
wherein the encryption means is adapted to receive an input of an indication, the indication showing whether the second encrypted file key is to be generated or not, and is adapted to
(a) generate, when the indication shows that the second encrypted file key is to be generated, the second encrypted file key, and
(b) suppresses, when the indication shows that the first encrypted file key is not to be generated, both generating and writing of the first encrypted file key.

17. The file management apparatus of claim 15
wherein the registration means further writes authentication information in association with the encrypted password, to the memory unit,
the encryption means further checks, using the authentication information, whether the encrypted key has been altered or not, when the encrypted key is decrypted, and
the encryption means further writes the authentication information in association with each of the first encrypted file key, the second encrypted file key, and the ciphertext, to the memory unit,
the first key obtaining means and the second key obtaining means each check, using the authentication information associated with the first encrypted file key and the second encrypted file key, whether the first encrypted file key and the second encrypted file key have been altered or not, when the first encrypted file key and the second encrypted file key are decrypted, and
the decryption means checks, using the authentication information that is associated with the ciphertext, whether the ciphertext has been altered or not, when the ciphertext is decrypted.

18. The file management apparatus of claim 15,
wherein the registration means writes the encrypted password to the key storage medium, instead of to the memory unit, and
the encryption means decrypts the encrypted password that has been written to the key storage medium.

19. The file management apparatus of claim 15,
wherein the registration means further receives an input of a new password, encrypts the new password using the key information to generate a new encrypted password, and writes the generated new encrypted password over the encrypted password in the memory unit, and
the encryption means decrypts the first encrypted file key using the key information to generate a file key, encrypts the file key using the new password to generate a new second encrypted file key, and writes the new second encrypted file key over the second encrypted file key in the memory unit.

20. The file management apparatus of claim 19,
wherein the registration means further receives an input of a user identifier that identifies a user,
the encryption means further writes the user identifier in association with the ciphertext, the first encrypted file key, and the second encrypted file key, to the memory unit, and
the encryption means retrieves the first encrypted file key that is associated with the user identifier, and decrypts the retrieved first encrypted file key

21. The file management apparatus of claim 19,
wherein the encryption means further writes encryption information in association with the ciphertext, the first encrypted file key, and the second encrypted file key, to the memory unit, the encryption information indicating that the plaintext has been encrypted, and
the encryption means retrieves the first encrypted file key that is associated with the encryption information, and decrypts the retrieved first encrypted file key.

22. The file management apparatus of claim 19,
wherein the registration means further receives an input of a user identifier that identifies a user,
the encryption means further writes the user identifer in association with a file identifier that identifies the ciphertext, the first encrypted file key, and the second encrypted file key, as a unified file, to the memory unit, and
the encryption means extracts the file identifier that is associated with the user identifier from the unified file, specifies the first encrypted file key identified by the extracted file identifier, and decrypts the specified first encrypted file key.

23. The file management apparatus of claim 19,
wherein the encryption means further writes encryption information in association with a file identifier that identifies the ciphertext, the first encrypted file key, and the second encrypted file key, as a unified file, to the memory unit, the encryption information indicating that the plaintext has been encrypted, and
the encryption means extracts the file identifier that is associated with the encryption information from the unified file, specifies the first encrypted file key identified by the extracted file identifier, and generates a file key from the specified first encryption file key.

24. The file management apparatus of claim 15 further comprising
deleting means for deleting the first encrypted file key that has been written to the memory unit.

25. The file management apparatus of claim 15,
wherein the key storage medium stores new key information beforehand, instead of the key information,
the registration means receives the input of the password and decrypts the received password using the new key information to generate a new encrypted password, and writes the generated new encrypted password over the encrypted password in the memory unit, and
the encryption means decrypts the second encrypted file key using the password to generate a file key, encrypts the file key using the new key information to generate a new first encrypted file key, and writes the new first encrypted file key over the first encrypted file key in the memory unit.

26. The file management apparatus of claim 25,
wherein the registration means further receives an input of a user identifier that identifies a user,
the encryption means further writes the user identifier in association with the ciphertext, the first encrypted file key, and the second encrypted file key, to the memory unit,
the encryption means retrieves the second encrypted file key that is associated with the user identifier and decrypts the retrieved second encrypted file key.

27. The file management apparatus of claim 25,
wherein the encryption means further writes encryption information in association with the ciphertext, the first encrypted file key, and the second encrypted file key, to the memory unit, the encryption information indicating that the plaintext has been encrypted, and
the encryption means retrieves the second encrypted file key that is associated with the encryption information and decrypts the retrieved second encrypted file key.

28. The file management apparatus of claim 25,
wherein the registration means further receives an input of a user identifier that identifies a user,
the encryption means further writes the user identifier in association with a file identifier that identifies the ciphertext, the first encrypted file key, and the second encrypted file key, as a unified file, to the memory unit, and
the encryption means extracts the file identifier that is associated with the user identifier from the unified file, specifies the second encrypted file key identified by the extracted file identifier, and decrypts the specified second encrypted file key.

29. The file management apparatus of claim 25,
wherein the encryption means further writes encryption information in association with a file identifier that identifies the ciphertext, the first encrypted file key, and the second encrypted file key, as a unified file, to the memory unit, the encryption information indicating that the plaintext has been encrypted, and
the encryption means extracts the file identifier that is associated with the encryption information from the unified file, specifies the second encrypted file key identified by the extracted file identifier, and generates a file key from the specified second encrypted file key.

30. The file management apparatus of claim 25,
wherein the switch means further receives an input of the password, decrypts the second encrypted file key using the received password to generate a second file key, decrypts the first encrypted file key using the key information to generate a first file key, judges whether the first file key and the second file key match, and detects an error when the first file key and the second file key do not match.

## Patentansprüche

1. Dateientschlüsselungsvorrichtung, die einen Schlüsseltext und einen ersten verschlüsselten Dateischlüssel speichert, der von einer Dateiverschlüsselungsvorrichtung erzeugt wird, wobei die Dateiverschlüsselungsvorrichtung dazu dient, eine Eingabe eines Passworts zu empfangen und Schlüsselinformationen von einem Schlüssel-Speichermedium (20) unter Verwendung des empfangenen Passworts zu verschlüsseln, um einen verschlüsselten Schlüssel zu erzeugen, oder dazu dient, das empfangene Passwort unter Verwendung der Schlüsselinformationen zu verschlüsseln und ein verschlüsseltes Passwort zu erzeugen, und den erzeugten verschlüsselten Schlüssel oder das erzeugte verschlüsselte Passwort in eine Speichereinheit (400) zu schreiben und einen Klartext unter Verwendung eines Dateischlüssels zu verschlüsseln, um einen Schlüsseltext zu erzeugen, den Dateischlüssel unter Verwendung der Schlüsselinformationen zu verschlüsseln, um einen ersten verschlüsselten Dateischlüssel zu erzeugen, und den Schlüsseltext in Verbindung mit dem verschlüsselten Dateischlüssel in die Speichereinheit (400) derselben zu schreiben, wobei die Dateientschlüsselungsvorrichtung umfasst:
ein Schlüssel-Speichermedium (20), das die Schlüsselinformationen im Voraus speichert;
eine Entschlüsselungseinrichtung (300, 300b) zum Entschlüsseln des Schlüsseltextes unter Verwendung eines Dateischlüssels, um einen entschlüsselten Text zu erzeugen;
**gekennzeichnet durch**
eine Umschalteinrichtung (303, 303b) zum Umschalten zwischen
(a) Entschlüsseln des ersten verschlüsselten Dateischlüssels auf Basis des Passworts, und
(b) Entschlüsseln des ersten verschlüsselten Dateischlüssels auf Basis der Schlüsselinformationen von dem Schlüssel-Speichermedium, um den Dateischlüssel zu erzeugen.

2. Dateiverwaltungsvorrichtung, die umfasst:
eine Dateiverschlüsselungsvorrichtung, die einen Klartext verschlüsselt, um einen Schlüsseltext zu erzeugen, und den Schlüsseltext in einer Speichereinheit (400) derselben speichert, wobei die Dateiverschlüsselungsvorrichtung umfasst:
ein Schlüssel-Speichermedium (20), das Schlüsselinformationen im Voraus speichert;
eine Registrierungseinrichtung (100) zum Empfangen einer Eingabe eines Passworts und zum Verschlüsseln der Schlüsselinformationen unter Verwendung des empfangenen Passworts, um einen verschlüsselten Schlüssel zu erzeugen, und zum Schreiben des erzeugten verschlüsselten Schlüssels in die Speichereinheit; und
eine Verschlüsselungseinrichtung (200) zum Verschlüsseln eines Klartextes unter Verwendung eines Dateischlüssels, um einen Schlüsseltext zu erzeugen, zum Verschlüsseln des Dateischlüssels unter Verwendung der Schlüsselinformationen, um den ersten verschlüsselten Dateischlüssel zu erzeugen, und zum Schreiben des Schlüsseltextes in Verbindung mit dem verschlüsselten Dateischlüssel in die Speichereinheit, und die des Weiteren umfasst:
die Dateientschlüsselungsvorrichtung nach Anspruch 1,
wobei die Registrierungseinrichtung des Weiteren eine Eingabe einer Benutzerkennung empfängt, die einen Benutzer identifiziert, und die Benutzerkennung in Verbindung mit dem verschlüsselten Schlüssel in die Speichereinheit schreibt,
die Umschalteinrichtung
(a) eine erste Schlüssel-Erfassungseinrichtung zum Empfangen einer Eingabe des Passworts und zum Entschlüsseln des verschlüsselten Schlüssels unter Verwendung des empfangenen Passworts, um die Schlüsselinformationen zu erzeugen, sowie eine zweite Schlüssel-Erfassungseinrichtung zum Lesen der Schlüsselinformationen von dem Schlüssel-Speichermedium enthält, und
(b) die Schlüsselinformationen mit der ersten Schlüssel-Erfassungseinrichtung oder der zweiten Schlüssel-Erfassungseinrichtung erfasst, und
die Entschlüsselungseinrichtungen den verschlüsselten Dateischlüssel unter Verwendung der erfassten Schlüsselinformationen entschlüsselt, um einen Dateischlüssel zu erzeugen, und den Schlüsseltext unter Verwendung des Dateischlüssels entschlüsselt, um einen entschlüsselten Text zu erzeugen, wobei
die erste Schlüssel-Erfassungseinrichtung des Weiteren eine Eingabe der Benutzerkennung empfängt und den verschlüsselten Schlüssel entschlüsselt, der mit der Benutzerkennung verbunden ist.

3. Dateiverwaltungsvorrichtung nach Anspruch 2,
wobei die Registrierungseinrichtung des Weiteren die Schlüsselinformationen und/oder Authentifizierungsinformationen in Verbindung mit dem verschlüsselten Schlüssel in die Speichereinheit schreibt,
die Verschlüsselungseinrichtung des Weiteren den verschlüsselten Schlüssel, die Schlüsselinformationen und/oder Authentifizierungsinformationen in Verbindung mit dem Schlüsseltext in die Speichereinheit schreibt,
die erste Schlüssel-Erfassungseinrichtung unter Verwendung der Authentifizierungsinformationen prüft, ob der verschlüsselte Schlüssel geändert worden ist oder nicht, wenn der verschlüsselte Schlüssel, der mit den Authentifizierungsinformationen verbunden ist, entschlüsselt wird, und
die Entschlüsselungseinrichtung unter Verwendung der Authentifizierungsinformationen prüft, ob der Schlüsseltext geändert worden ist oder nicht, wenn der Schlüsseltext, der mit den Authentifizierungsinformationen verbunden ist, entschlüsselt wird.

4. Dateiverwaltungsvorrichtung nach Anspruch 3,
wobei die Registrierungseinrichtung den verschlüsselten Schlüssel in die Speichereinheit schreibt, die ein tragbares Speichermedium ist, und
die erste Schlüssel-Erfassungseinrichtung den verschlüsselten Schlüssel entschlüsselt, der in die Speichereinheit geschrieben worden ist, die das tragbare Speichermedium ist.

5. Dateiverwaltungsvorrichtung nach Anspruch 2, die umfasst:
eine Löscheinrichtung zum Löschen des verschlüsselten Schlüssels, der in die Speichereinheit geschrieben worden ist.

6. Dateiverwaltungsvorrichtung nach Anspruch 2, die des Weiteren umfasst:
eine Löscheinrichtung zum Löschen des verschlüsselten Schlüssels, der in die Speichereinheit geschrieben worden ist,
wobei die Registrierungseinrichtung des Weiteren eine Eingabe eines neuen Passworts empfängt, die Schlüsselinformationen unter Verwendung des neuen Passworts verschlüsselt, um einen neuen verschlüsselten Schlüssel zu erzeugen, und
den erzeugten neuen verschlüsselten Schlüssel in die Speichereinheit schreibt.

7. Dateiverwaltungsvorrichtung nach Anspruch 2,
wobei das Schlüssel-Speichermedium im Voraus neue Schlüsselinformationen anstelle der Schlüsselinformationen speichert,
die Registrierungseinrichtung die Eingabe des Passworts empfängt und den verschlüsselten Schlüssel unter Verwendung des Passworts entschlüsselt, um Schlüsselinformationen zu erzeugen,
die Verschlüsselungseinrichtung den verschlüsselten Dateischlüssel unter Verwendung der Schlüsselinformationen entschlüsselt, um einen Dateischlüssel zu erzeugen, den Dateischlüssel unter Verwendung der neuen Schlüsselinformationen verschlüsselt, um einen neuen verschlüsselten Dateischlüssel zu erzeugen, und den neuen verschlüsselten Dateischlüssel über den verschlüsselten Dateischlüssel in der Speichereinheit schreibt, und
die Registrierungseinrichtung die neuen Schlüsselinformationen unter Verwendung des Passworts verschlüsselt, um einen neuen verschlüsselten Schlüssel zu erzeugen, und den neuen verschlüsselten Schlüssel über den verschlüsselten Schlüssel in der Speichereinheit schreibt.

8. Dateiverwaltungssystem nach Anspruch 7,
wobei die Registrierungseinrichtung des Weiteren eine Eingabe einer Benutzerkennung empfängt, die einen Benutzer identifiziert,
die Verschlüsselungseinrichtung des Weiteren die Benutzerkennung zusammen mit dem Klartext und dem verschlüsselten Dateischlüssel in die Speichereinheit schreibt, und
die Verschlüsselungseinrichtung den verschlüsselten Dateischlüssel abruft, der mit der Benutzerkennung in der Speichereinheit verbunden ist, und einen Dateischlüssel aus dem abgerufenen verschlüsselten Dateischlüssel erzeugt.

9. Dateiverwaltungsvorrichtung nach Anspruch 7,
wobei die Verschlüsselungseinrichtung des Weiteren Verschlüsselungsinformationen in Verbindung mit dem Schlüsseltext und dem verschlüsselten Dateischlüssel in die Speichereinheit schreibt und die Verschlüsselungsinformationen anzeigen, dass der Klartext verschlüsselt worden ist, und
die Verschlüsselungseinrichtung den verschlüsselten Dateischlüssel abruft, der mit den Verschlüsselungsinformationen in der Speichereinheit verbunden ist, und einen Dateischlüssel aus dem abgerufenen verschlüsselten Dateischlüssel erzeugt.

10. Dateiverwaltungsvorrichtung nach Anspruch 7,
wobei die Registrierungseinrichtung des Weiteren eine Eingabe einer Benutzerkennung empfängt, die einen Benutzer identifiziert,
die Verschlüsselungseinrichtung des Weiteren die Benutzerkennung zusammen mit einer Dateikennung, die den Schlüsseltext identifiziert, und dem verschlüsselten Dateischlüssel als einheitliche Datei in die Speichereinheit schreibt, und
die Verschlüsselungseinrichtung die Dateikennung, die mit der Benutzerkennung verbunden ist, aus der einheitlichen Datei extrahiert, den durch die extrahierte Dateikennung identifizierten verschlüsselten Dateischlüssel spezifiziert und einen Dateischlüssel aus dem spezifizierten verschlüsselten Dateischlüssel erzeugt.

11. Dateiverwaltungsvorrichtung nach Anspruch 7,
wobei die Verschlüsselungseinrichtung des Weiteren Verschlüsselungsinformationen zusammen mit einer Dateikennung, die den Schlüsseltext identifiziert, und dem verschlüsselten Dateischlüssel als eine einheitliche Datei in die Speichereinheit schreibt, und die Verschlüsselungsinformationen anzeigen, dass der Klartext verschlüsselt worden ist, und
die Verschlüsselungseinrichtungen die Dateikennung, die mit den Verschlüsselungsinformationen verbunden ist, aus der einheitlichen Datei extrahiert, den durch die extrahierte Dateikennung identifizierten verschlüsselten Dateischlüssel spezifiziert und einen Dateischlüssel aus dem spezifizierten verschlüsselten Dateischlüssel erzeugt.

12. Dateiverwaltungsvorrichtung nach Anspruch 2,
wobei die Verschlüsselungseinrichtung des Weiteren den verschlüsselten Schlüssel mit dem Schlüsseltext und dem verschlüsselten Dateischlüssel in die Speichereinheit schreibt, und
die erste Schlüssel-Erfassungseinrichtung den verschlüsselten Schlüssel, der mit dem Schlüsseltext und dem verschlüsselten Dateischlüssel verbunden ist, entschlüsselt.

13. Dateiverwaltungsvorrichtung nach Anspruch 12,
wobei die Verschlüsselungseinrichtung des Weiteren eine Eingabe einer Anzeige empfängt, wobei die Anzeige zeigt, ob der verschlüsselte Schlüssel und der Schlüsseltext in Verbindung miteinander in die Speichereinheit zu schreiben sind, und, wenn die Anzeige zeigt, dass der verschlüsselte Schlüssel und der Schlüsseltext in Verbindung miteinander zu schreiben sind, den verschlüsselten Schlüssel in Verbindung mit dem Schlüsseltext in die Speichereinheit schreibt.

14. Dateiverwaltungsvorrichtung nach Anspruch 12,
wobei die Registrierungseinrichtung den erzeugten verschlüsselten Schlüssel nicht in die Speichereinheit, sondern auf das Schlüssel-Speichermedium schreibt.

15. Dateiverwaltungsvorrichtung, die umfasst:
eine Dateiverschlüsselungsvorrichtung, die einen Klartext verschlüsselt, um einen Schlüsseltext zu erzeugen, und den Schlüsseltext in einer Speichereinheit (400b) derselben speichert, wobei die Dateiverschlüsselungsvorrichtung umfasst:
ein Schlüssel-Speichermedium (20), das Schlüsselinformationen im Voraus speichert;
eine Registrierungseinrichtung (100b) zum Empfangen einer Eingabe eines Passworts und zum Verschlüsseln des empfangenen Passworts unter Verwendung der Schlüsselinformationen, um ein verschlüsseltes Passwort zu erzeugen, und zum Schreiben des erzeugten verschlüsselten Passworts in die Speichereinheit; und
eine Verschlüsselungseinrichtung (200b) zum Verschlüsseln eines Klartextes unter Verwendung eines Dateischlüssels, um einen Schlüsseltext zu erzeugen, zum Verschlüsseln des Dateischlüssels unter Verwendung der Schlüsselinformationen, um einen ersten verschlüsselten Dateischlüssel zu erzeugen, und zum Schreiben des Schlüsseltextes in Verbindung mit dem verschlüsselten Dateischlüssel in die Speichereinheit, und wobei sie des Weiteren umfasst:
die Dateientschlüsselungsvorrichtung nach Anspruch 1,
wobei die Registrierungseinrichtung des Weiteren eine Eingabe einer Benutzerkennung empfängt, die einen Benutzer identifiziert, und das verschlüsselte Passwort in Verbindung mit der Benutzerkennung in die Speichereinheit schreibt, und
die Verschlüsselungseinrichtung der Dateiverschlüsselungsvorrichtung so eingerichtet ist, dass sie den Dateischlüssel unter Verwendung des Passworts verschlüsselt, um einen zweiten verschlüsselten Dateischlüssel zu erzeugen,
die Umschalteinrichtung
(a) eine erste Schlüssel-Erfassungseinrichtung zum Empfangen einer Eingabe des Passworts und zum Entschlüsseln des zweiten verschlüsselten Dateischlüssels unter Verwendung des empfangenen Passworts sowie eine zweite Schlüssel-Erfassungseinrichtung zum Entschlüsseln des ersten verschlüsselten Dateischlüssels unter Verwendung der Schlüsselinformationen enthält, und
(b) den Dateischlüssel mit der ersten Schlüssel-Erfassungseinrichtung oder der zweiten Schlüssel-Erfassungseinrichtung erfasst, und die Verschlüsselungseinrichtung des Weiteren eine Eingabe der Benutzerkennung empfängt und das verschlüsselte Passwort entschlüsselt, das mit der Benutzerkennung verbunden ist.

16. Dateiverwaltungsvorrichtung nach Anspruch 15,
wobei die Verschlüsselungseinrichtung so eingerichtet ist, dass sie eine Eingabe einer Anzeige empfängt, wobei die Anzeige zeigt, ob der zweite verschlüsselte Dateischlüssel zu erzeugen ist oder nicht, und so eingerichtet ist, dass sie
(a) wenn die Anzeige zeigt, dass der zweite verschlüsselte Dateischlüssel zu erzeugen ist, den zweiten verschlüsselten Dateischlüssel erzeugt, und
(b) wenn die Anzeige zeigt, dass der erste verschlüsselte Dateischlüssel nicht zu erzeugen ist, sowohl Erzeugen als auch Schreiben des ersten verschlüsselten Dateischlüssels unterdrückt.

17. Dateiverwaltungsvorrichtung nach Anspruch 15,
wobei die Registrierungseinrichtung des Weiteren Authentifizierungsinformationen in Verbindung mit dem verschlüsselten Passwort in die Speichereinheit schreibt,
die Verschlüsselungseinrichtung des Weiteren unter Verwendung der Authentifizierungsinformationen prüft, ob der verschlüsselte Schlüssel geändert worden ist oder nicht, wenn der verschlüsselte Schlüssel entschlüsselt wird, und
die Verschlüsselungseinrichtung des Weiteren die Authentifizierungsinformationen in Verbindung mit dem ersten verschlüsselten Dateischlüssel, dem zweiten verschlüsselten Dateischlüssel und dem Schlüsseltext in die Speichereinheit schreibt,
die erste Schlüssel-Erfassungseinrichtung und die zweite Schlüssel-Erfassungseinrichtung jeweils unter Verwendung der Authentifizierungsinformationen, die mit dem ersten verschlüsselten Dateischlüssel und dem zweiten verschlüsselten Dateischlüssel verbunden sind, prüfen, ob der erste verschlüsselte Dateischlüssel und der zweite verschlüsselte Dateischlüssel geändert worden sind oder nicht, wenn der erste verschlüsselte Dateischlüssel und der zweite verschlüsselte Dateischlüssel entschlüsselt werden, und
die Entschlüsselungseinrichtung unter Verwendung der Authentifizierungsinformationen, die mit dem Schlüsseltext verbunden sind, prüft, ob der Schlüsseltext geändert worden ist oder nicht, wenn der Schlüsseltext entschlüsselt wird.

18. Dateivenivaltungsvorrichtung nach Anspruch 15,
wobei die Registrierungseinrichtung das verschlüsselte Passwort nicht in die Speichereinheit, sondern auf das Schlüssel-Speichermedium schreibt, und
die Verschlüsselungseinrichtung das verschlüsselte Passwort entschlüsselt, das auf das Schlüssel-Speichermedium geschrieben worden ist.

19. Dateiverwaltungsvorrichtung nach Anspruch 15,
wobei die Registrierungseinrichtung des Weiteren eine Eingabe eines neuen Passworts empfängt, das neue Passwort unter Verwendung der Schlüsselinformationen verschlüsselt, um ein neues verschlüsselte Passwort zu erzeugen, und das erzeugte neue verschlüsselte Passwort über das verschlüsselte Passwort in der Speichereinheit schreibt, und
die Verschlüsselungseinrichtung den ersten verschlüsselten Dateischlüssel unter Verwendung der Schlüsselinformationen entschlüsselt, um einen Dateischlüssel zu erzeugen, den Dateischlüssel unter Verwendung des neuen Passworts verschlüsselt, um einen neuen zweiten verschlüsselten Dateischlüssel zu erzeugen, und den neuen zweiten verschlüsselten Dateischlüssel über den zweiten verschlüsselten Dateischlüssel in der Speichereinheit schreibt.

20. Dateiverwaltungsvorrichtung nach Anspruch 19,
wobei die Registrierungseinrichtung des Weiteren eine Eingabe einer Benutzerkennung empfängt, die einen Benutzer identifiziert,
die Verschlüsselungseinrichtung des Weiteren die Benutzerkennung in Verbindung mit dem Schlüsseltext, dem ersten verschlüsselten Dateischlüssel und dem zweiten verschlüsselten Dateischlüssel in die Speichereinheit schreibt, und
die Verschlüsselungseinrichtung den ersten verschlüsselten Dateischlüssel, der mit der Benutzerkennung verbunden ist, abruft und den abgerufenen ersten verschlüsselten Dateischlüssel entschlüsselt.

21. Dateiverwaltungsvorrichtung nach Anspruch 19,
wobei die Verschlüsselungseinrichtung des Weiteren Verschlüsselungsinformationen in Verbindung mit dem Schlüsseltext, dem ersten verschlüsselten Dateischlüssel und dem zweiten verschlüsselten Dateischlüssel in die Speichereinheit schreibt, wobei die Verschlüsselungsinformationen anzeigen, dass der Klartext verschlüsselt worden ist, und
die Verschlüsselungseinrichtung den ersten verschlüsselten Dateischlüssel abruft, der mit den Verschlüsselungsinformationen verbunden ist, und den abgerufenen ersten verschlüsselten Dateischlüssel entschlüsselt.

22. Dateiverwaltungsvorrichtung nach Anspruch 19,
wobei die Registrierungseinrichtung des Weiteren eine Eingabe einer Benutzerkennung empfängt, die einen Benutzer identifiziert,
die Verschlüsselungseinrichtung des Weiteren die Benutzerkennung in Verbindung mit einer Dateikennung, die den Schlüsseltext identifiziert, dem ersten verschlüsselten Dateischlüssel und dem zweiten verschlüsselten Dateischlüssel als eine einheitliche Datei in die Speichereinheit schreibt, und
die Verschlüsselungseinrichtung die Dateikennung, die mit der Benutzerkennung verbunden ist, aus der einheitlichen Datei extrahiert, den durch die extrahierte Dateikennung identifizierten ersten verschlüsselten Dateischlüssel spezifiziert und den spezifizierten ersten verschlüsselten Dateischlüssel entschlüsselt.

23. Dateiverwaltungsvorrichtung nach Anspruch 19,
wobei die Verschlüsselungseinrichtung des Weiteren Verschlüsselungsinformationen in Verbindung mit einer Dateikennung, die den Schlüsseltext identifiziert, dem ersten verschlüsselten Dateischlüssel und dem zweiten verschlüsselten Dateischlüssel als eine einheitliche Datei in die Speichereinheit schreibt, wobei die Verschlüsselungsinformationen anzeigen, dass der Klartext verschlüsselt worden ist, und
die Verschlüsselungseinrichtung die Dateikennung, die mit den Verschlüsselungsinformationen verbunden ist, aus der einheitlichen Datei extrahiert, den durch die extrahierte Dateikennung identifizierten ersten verschlüsselten Dateischlüssel spezifiziert und einen Dateischlüssel aus dem spezifizierten ersten Verschlüsselungs-Dateischlüssel erzeugt.

24. Dateiverwaltungsvorrichtung nach Anspruch 15, die des Weiteren umfasst:
eine Löscheinrichtung zum Löschen des ersten verschlüsselten Dateischlüssels, der in die Speichereinheit geschrieben worden ist.

25. Dateiverwaltungsvorrichtung nach Anspruch 15,
wobei das Schlüssel-Speichermedium im Voraus neue Schlüsselinformationen anstelle der Schlüsselinformationen speichert,
die Registrierungseinrichtung die Eingabe des Passworts empfängt und das empfangene Passwort unter Verwendung der neuen Schlüsselinformationen entschlüsselt, um ein neues verschlüsseltes Passwort zu erzeugen, und das erzeugte neue verschlüsselte Passwort über das verschlüsselte Passwort in der Speichereinheit schreibt, und
die Verschlüsselungseinrichtung den zweiten verschlüsselten Dateischlüssel unter Verwendung des Passworts entschlüsselt, um einen Dateischlüssel zu erzeugen, den Dateischlüssel unter Verwendung der neuen Schlüsselinformationen verschlüsselt, um einen neuen ersten verschlüsselten Dateischlüssel zu erzeugen, und den neuen ersten verschlüsselten Dateischlüssel über den ersten verschlüsselten Dateischlüssel in der Speichereinheit schreibt.

26. Dateiverwaltungsvorrichtung nach Anspruch 25,
wobei die Registrierungseinrichtung des Weiteren eine Eingabe einer Benutzerkennung empfängt, die einen Benutzer identifiziert,
die Verschlüsselungseinrichtung des Weiteren die Benutzerkennung in Verbindung mit dem Schlüsseltext, dem ersten verschlüsselten Dateischlüssel und dem zweiten verschlüsselten Dateischlüssel in die Speichereinheit schreibt,
die Verschlüsselungseinrichtung den zweiten verschlüsselten Dateischlüssel abruft, der mit der Benutzerkennung verbunden ist, und den abgerufenen zweiten verschlüsselten Dateischlüssel entschlüsselt.

27. Dateiverwaltungsvorrichtung nach Anspruch 25,
wobei die Verschlüsselungseinrichtung des Weiteren Verschlüsselungsinformationen in Verbindung mit dem Schlüsseltext, dem ersten verschlüsselten Dateischlüssel und dem zweiten verschlüsselten Dateischlüssel in die Speichereinheit schreibt, wobei die Verschlüsselungsinformationen anzeigen, dass der Klartext verschlüsselt worden ist, und
die Verschlüsselungseinrichtung den zweiten verschlüsselten Dateischlüssel abruft, der mit den Verschlüsselungsinformationen verbunden ist, und den abgerufenen zweiten verschlüsselten Dateischlüssel entschlüsselt.

28. Dateiverwaltungsvorrichtung nach Anspruch 25,
wobei die Registrierungseinrichtung eine Eingabe einer Benutzerkennung empfängt, die einen Benutzer identifiziert,
die Verschlüsselungseinrichtung des Weiteren die Benutzerkennung in Verbindung mit einer Dateikennung, die den Schlüsseltext identifiziert, dem ersten verschlüsselten Dateischlüssel und dem zweiten verschlüsselten Dateischlüssel als eine einheitliche Datei in die Speichereinheit schreibt, und
die Verschlüsselungseinrichtung die Dateikennung, die mit der Benutzerkennung verbunden ist, aus der einheitlichen Datei extrahiert, den durch die extrahierte Dateikennung identifizierten zweiten verschlüsselten Dateischlüssel spezifiziert und den spezifizierten zweiten verschlüsselten Dateischlüssel entschlüsselt.

29. Dateiverwaltungsvorrichtung nach Anspruch 25,
wobei die Entschlüsselungseinrichtung des Weiteren Verschlüsselungsinformationen in Verbindung mit einer Dateikennung, die den Schlüsseltext identifiziert, dem ersten verschlüsselten Dateischlüssel und dem zweiten verschlüsselten Dateischlüssel als eine einheitliche Datei in die Speichereinheit schreibt, wobei die Verschlüsselungsinformationen anzeigen, dass der Klartext verschlüsselt worden ist, und
die Verschlüsselungseinrichtung die Dateikennung, die mit den Verschlüsselungsinformationen verbunden ist, aus der einheitlichen Datei extrahiert, den durch die extrahierte Dateikennung identifizierten zweiten verschlüsselten Dateischlüssel spezifiziert und einen Dateischlüssel aus dem spezifizierten zweiten verschlüsselten Dateischlüssel erzeugt.

30. Dateiverwaltungsvorrichtung nach Anspruch 25,
wobei die Umschalteinrichtung des Weiteren eine Eingabe des Passworts empfängt, den zweiten verschlüsselten Dateischlüssel unter Verwendung des empfangenen Passworts entschlüsselt, um einen zweiten Dateischlüssel zu erzeugen, den ersten verschlüsselten Dateischlüssel unter Verwendung der Schlüsselinformationen entschlüsselt, um einen ersten Dateischlüssel zu erzeugen, feststellt, ob der erste Dateischlüssel und der zweite Dateischlüssel einander entsprechen, und einen Fehler erfasst, wenn der erste Dateischlüssel und der zweite Dateischlüssel einander nicht entsprechen.

## Revendications

1. Dispositif pour le déchiffrage de fichiers qui mémorise un texte chiffré et une première clé de fichier chiffré générée par un dispositif de chiffrage de fichiers, le dispositif de chiffrage de fichiers étant adapté pour recevoir une entrée d'un mot de passe et pour chiffrer des informations de clé à partir d'un support de stockage de clés (20) en utilisant le mot de passe reçu pour générer une clé chiffrée, ou pour chiffrer le mot de passe reçu en utilisant les informations de clé pour générer un mot de passe chiffré, et écrire la clé chiffrée générée ou le mot de passe chiffré généré dans une unité de mémoire (400) et pour chiffrer un texte chiffré en utilisant une clé de fichier pour générer un texte chiffré, chiffrer la clé de fichier en utilisant les informations de clé pour générer une première clé de fichier chiffrée, et écrire le texte chiffré en association avec la clé de fichier chiffrée dans l'unité de mémoire (400) de celui-ci, le dispositif de chiffrage de fichiers comprenant:
un support de stockage de clés (20) stockant préalablement les informations de clé ;
des moyens de déchiffrage (300, 300b) pour déchiffrer le texte chiffré en utilisant une clé de fichier pour générer un texte déchiffré ;
**caractérisé par**
des moyens de commutation (303, 303b) pour commuter entre (a) déchiffrer la première clé de fichier chiffrée sur la base du mot de passe et (b) déchiffrer la première clé de fichier chiffrée sur la base des informations de clé provenant du support de stockage de clés, pour générer la clé de fichier.

2. Dispositif de gestion de fichiers comprenant :
un dispositif de chiffrage de fichiers qui chiffre un texte en clair pour générer un texte chiffré et mémorise le texte chiffré dans une unité de mémoire (400) de celui-ci, le dispositif de chiffrage de fichiers comprenant:
un support de stockage de clés (20) stockant préalablement les informations de clé ;
des moyens d'enregistrement (100) pour recevoir une entrée d'un mot de passe et pour chiffrer des informations de clé en utilisant le mot de passe reçu pour générer une clé chiffrée et écrire la clé chiffrée générée dans l'unité de mémoire ; et
des moyens de chiffrage (200) pour chiffrer le texte en clair en utilisant une clé de fichier pour générer un texte chiffré, chiffrer la clé de fichier en utilisant les informations de clé pour générer la première clé de fichier chiffrée, et écrire le texte chiffré en association avec la clé de fichier chiffrée, dans l'unité de mémoire, et comprenant en outre :
le dispositif de chiffrage de fichiers selon la revendication 1,
dans lequel les moyens d'enregistrement reçoivent en outre une entrée d'un identificateur d'utilisateur qui identifie un utilisateur et écrivent l'identificateur d'utilisateur en association avec la clé chiffrée dans l'unité de mémoire,
les moyens de commutation
(a) comprennent des premiers moyens d'obtention de clé pour recevoir une entrée d'un mot de passe et déchiffrer la clé chiffrée en utilisant le mot de passe reçu pour générer les informations de clé, et des deuxièmes moyens d'obtention de clé pour lire les informations de clé à partir du support de stockage de clés, et
(b) obtiennent les informations de clé par l'un des premiers moyens d'obtention de clé et des deuxièmes moyens d'obtention de clé, et
les moyens de déchiffrage déchiffrent la clé de fichier chiffrée en utilisant les informations de clé obtenues pour générer une clé de fichier et déchiffrent le texte chiffré en utilisant la clé de fichier pour générer un texte déchiffré, dans lequel
les premiers moyens d'obtention de clé reçoivent en outre l'identificateur d'utilisateur et déchiffrent la clé chiffrée qui est associée à l'identificateur d'utilisateur.

3. Dispositif pour la gestion de fichier selon la revendication 2,
dans lequel les moyens d'enregistrement écrivent en outre les informations de clé et/ou des informations d'authentification en association avec la clé chiffrée dans l'unité de mémoire,
les moyens de chiffrage écrivent en outre la clé chiffrée, les informations de clé et/ou des informations d'authentification en association avec le texte chiffré dans l'unité de mémoire,
les premiers moyens d'obtention de clé vérifient, en utilisant les informations d'authentification, si la clé chiffrée a été ou non altérée, quand la clé chiffrée qui est associée aux informations d'authentification est déchiffrée, et
les moyens de déchiffrage vérifient, en utilisant les informations d'authentification, si le texte chiffré a été ou non altéré, quand le texte chiffré qui est associé aux informations d'authentification est déchiffré.

4. Dispositif pour la gestion de fichier selon la revendication 3,
dans lequel les moyens d'enregistrement écrivent la clé chiffrée dans l'unité de mémoire qui est un support de stockage portable, et
les premiers moyens d'obtention de clé déchiffrent la clé chiffrée qui a été écrite dans l'unité de mémoire qui est le support de stockage portable.

5. Dispositif pour la gestion de fichier selon la revendication 2, comprenant en outre
des moyens d'effacement pour effacer la clé chiffrée qui a été écrite dans l'unité de mémoire.

6. Dispositif pour la gestion de fichier selon la revendication 2, comprenant en outre
des moyens d'effacement pour effacer la clé chiffrée qui a été écrite dans l'unité de mémoire,
dans lequel les moyens d'enregistrement reçoivent en outre une entrée d'un nouveau mot de passe, chiffrent les informations de clé en utilisant le nouveau mot de passe pour générer une nouvelle clé chiffrée et écrivent la nouvelle clé chiffrée générée dans l'unité de mémoire.

7. Dispositif pour la gestion de fichier selon la revendication 2,
dans lequel le support de stockage de clés stocke préalablement de nouvelles informations de clé, au lieu des informations de clé,
les moyens d'enregistrement reçoivent l'entrée du mot de passe et déchiffrent la clé chiffrée en utilisant le mot de passe pour générer des informations de clé,
les moyens de chiffrage déchiffrent la clé fichier chiffrée en utilisant les informations de clé pour générer une clé de fichier, chiffrent la clé de fichier en utilisant les nouvelles informations de clé pour générer une nouvelle clé de fichier chiffrée et écrivent la nouvelle clé de fichier chiffrée sur la clé de fichier chiffrée dans l'unité de mémoire, et
les moyens d'enregistrement chiffrent les nouvelles informations de clé en utilisant le mot de passe pour générer une nouvelle clé chiffrée et écrivent la nouvelle clé de fichier chiffrée sur la clé de fichier chiffrée dans l'unité de mémoire.

8. Dispositif pour la gestion de fichier selon la revendication 7,
dans lequel les moyens d'enregistrement reçoivent en outre une entrée d'un identificateur d'utilisateur qui identifie un utilisateur,
les moyens de chiffrage écrivent en outre l'identificateur d'utilisateur en association avec le texte chiffré et la clé de fichier chiffrée dans l'unité de mémoire, et
les moyens de chiffrage récupèrent la clé de fichier chiffrée qui est associée à l'identificateur d'utilisateur dans l'unité de mémoire et génèrent une clé de fichier à partir de la clé de fichier chiffrée récupérée.

9. Dispositif pour la gestion de fichier selon la revendication 7,
dans lequel les moyens de chiffrage écrivent en outre des informations de chiffrage en association avec le texte chiffré et la clé de fichier chiffrée dans l'unité de mémoire, les informations de chiffrage indiquant que le texte en clair a été chiffré, et
les moyens de chiffrage récupèrent la clé de fichier chiffrée qui est associée aux informations de chiffrage dans l'unité de mémoire et génèrent une clé de fichier à partir de la clé de fichier chiffrée récupérée.

10. Dispositif pour la gestion de fichier selon la revendication 7,
dans lequel les moyens d'enregistrement reçoivent en outre une entrée d'un identificateur d'utilisateur qui identifie un utilisateur,
les moyens de chiffrage écrivent en outre l'identificateur d'utilisateur en association avec un identificateur de fichier qui identifie le texte chiffré et la clé de fichier chiffrée, comme un fichier unifié, dans l'unité de mémoire, et
les moyens de chiffrage extraient l'identificateur de fichier qui est associé à l'identificateur d'utilisateur à partir du fichier unifié, spécifient la clé de fichier chiffrée identifiée par l'identificateur de fichier extrait et génèrent une clé de fichier à partir de la clé de fichier chiffrée spécifiée.

11. Dispositif pour la gestion de fichier selon la revendication 7,
dans lequel les moyens de chiffrage écrivent en outre des informations de chiffrage en association avec un identificateur de fichier qui identifie le texte chiffré et la clé de fichier chiffrée, comme un fichier unifié, dans l'unité de mémoire, les informations de chiffrage indiquant que le texte en clair a été chiffré, et
les moyens de chiffrage extraient l'identificateur de fichier chiffrée qui est associé aux informations de chiffrage à partir du fichier unifié, spécifient la clé de fichier chiffrée identifiée par l'identificateur de fichier extrait et 5 génèrent une clé de fichier à partir de la clé de fichier chiffrée spécifiée.

12. Dispositif pour la gestion de fichier selon la revendication 2,
dans lequel les moyens de chiffrage écrivent en outre la clé chiffrée en association avec le texte chiffré et la clé de fichier chiffrée dans l'unité de mémoire, et
les premiers moyens d'obtention de clé déchiffrent la clé chiffrée qui est associée au texte chiffré et à la clé de fichier chiffrée.

13. Dispositif pour la gestion de fichier selon la revendication 12,
dans lequel les moyens d'enregistrement reçoivent en outre une entrée d'une indication, l'indication montrant si la clé chiffrée et le texte chiffré doivent être écrits en association l'un avec l'autre dans l'unité de mémoire, et écrivent, quand l'indication montre que la clé chiffrée et le texte chiffré doivent être écrits en association l'un avec l'autre, la clé chiffrée en association avec le texte chiffré dans l'unité de mémoire.

14. Dispositif pour la gestion de fichier selon la revendication 12,
dans lequel les moyens d'enregistrement écrivent la clé chiffrée générée sur le support de stockage de clés au lieu de l'unité de mémoire.

15. Dispositif de gestion de fichiers comprenant :
un dispositif de chiffrage de fichiers qui chiffre un texte en clair pour générer un texte chiffré et mémorise le texte chiffré dans une unité de mémoire (400b) de celui-ci, le dispositif de chiffrage de fichiers comprenant :
un support de stockage de clés (20) stockant préalablement les informations de clé ;
des moyens d'enregistrement (100b) pour recevoir une entrée d'un mot de passe et pour chiffrer le mot de passe reçu en utilisant les informations de clé pour générer un mot d passe chiffré, et écrire le mot de passe chiffré généré dans l'unité de mémoire ; et
des moyens de chiffrage (200b) pour chiffrer le texte en clair en utilisant une clé de fichier pour générer un texte chiffré, chiffrer la clé de fichier en utilisant les informations de clé pour générer une première clé de fichier chiffrée, et écrire le texte chiffré en association avec la clé de fichier chiffrée, dans l'unité de mémoire, et comprenant en outre :
le dispositif de chiffrage de fichiers selon la revendication 1,
dans lequel les moyens d'enregistrement reçoivent en outre une entrée d'un identificateur d'utilisateur qui identifie un utilisateur et écrivent le mot de passe chiffré en association avec l'identificateur d'utilisateur dans l'unité de mémoire, et
les moyens de chiffrage du dispositif de chiffrage de fichiers sont adaptés pour chiffrer la clé de fichier en utilisant le mot de passe pour générer une deuxième clé de fichier chiffrée,
les moyens de commutation
(a) comprennent des premiers moyens d'obtention de clé pour recevoir une entrée d'un mot de passe et déchiffrer la deuxième clé chiffrée en utilisant le mot de passe reçu, et des deuxièmes moyens d'obtention de clé pour déchiffrer la première clé de fichier chiffrée en utilisant les informations de clé, et
(b) obtiennent la clé chiffrée par l'un des premiers moyens d'obtention de clé et des deuxièmes moyens d'obtention de clé, et
les moyens de chiffrage reçoivent en outre une entrée de l'identificateur d'utilisateur et déchiffrent le mot de passe chiffré qui est associé à l'identificateur d'utilisateur.

16. Dispositif pour la gestion de fichier selon la revendication 15,
dans lequel les moyens de chiffrage sont adaptés pour recevoir une entrée d'une indication, l'indication montrant si la deuxième clé de fichier chiffrée doit être générée ou non, et sont adaptés pour
(a) générer, quand l'indication montre que la deuxième clé de fichier chiffrée doit être générée, la deuxième clé de fichier chiffrée, et
(b) supprimer, quand l'indication montre que la deuxième clé de fichier chiffrée ne doit pas être générée, à la fois en générant et écrivant la première clé de fichier chiffrée.

17. Dispositif pour la gestion de fichier selon la revendication 15,
dans lequel les moyens d'enregistrement écrivent en outre les informations d'authentification en association avec le mot de passe chiffré dans l'unité de mémoire,
les moyens de chiffrage vérifient en outre, en utilisant les informations d'authentification, si la clé chiffrée a été ou non altérée, quand la clé chiffrée est déchiffrée, et
les moyens de déchiffrage écrivent en outre les informations d'authentification en association avec chacun de la première clé de fichier chiffrée, la deuxième clé de fichier chiffrée et le texte chiffré, dans l'unité de mémoire,
les premiers moyens d'obtention de clé et les deuxièmes moyens d'obtention de clé vérifient chacun, en utilisant les informations d'authentification en association avec la première clé de fichier chiffrée et la deuxième clé de fichier chiffrée, si la première clé de fichier chiffrée et la deuxième clé de fichier chiffrée ont été ou non altérées, quand la première clé de fichier chiffrée et la deuxième clé de fichier chiffrée sont déchiffrées, et
les moyens de déchiffrage vérifient, en utilisant les informations d'authentification associées au texte chiffré, si le texte chiffré a été ou non altéré, quand le texte chiffré est déchiffré.

18. Dispositif pour la gestion de fichier selon la revendication 15,
dans lequel les moyens d'enregistrement écrivent le mot de passe chiffré sur le support de stockage de clés, au lieu de l'unité de mémoire, et
les moyens de chiffrage déchiffrent le mot de passe chiffré qui a été écrit sur le support de stockage de clés.

19. Dispositif pour la gestion de fichier selon la revendication 15,
dans lequel les moyens d'enregistrement reçoivent en outre une entrée d'un nouveau mot de passe, chiffrent le nouveau mot de passe en utilisant les informations de clé pour générer un nouveau de passe chiffré, et écrivent le nouveau mot de passe chiffré généré sur le mot de passe chiffré dans l'unité de mémoire, et
les moyens de chiffrage déchiffrent la première clé de fichier chiffrée en utilisant les informations de clé pour générer une clé de fichier, chiffrent la clé de fichier en utilisant le nouveau mot de passe pour générer une nouvelle deuxième clé de fichier chiffrée, et écrivent la nouvelle deuxième clé de fichier chiffrée sur la deuxième clé de fichier chiffrée dans l'unité de mémoire.

20. Dispositif pour la gestion de fichier selon la revendication 19,
dans lequel les moyens d'enregistrement reçoivent en outre une entrée d'un identificateur d'utilisateur qui identifie un utilisateur,
les moyens de chiffrage écrivent en outre l'identificateur d'utilisateur en association avec le texte chiffré, la première clé de fichier chiffrée et la deuxième clé de fichier chiffrée, dans l'unité de mémoire, et
les moyens de chiffrage récupèrent la première clé de fichier chiffrée qui est associée à l'identificateur d'utilisateur et déchiffrent la première clé de fichier chiffrée récupérée.

21. Dispositif pour la gestion de fichier selon la revendication 19,
dans lequel les moyens de chiffrage écrivent en outre des informations de chiffrage en association avec le texte chiffré, la première clé de fichier chiffrée et la deuxième clé de fichier chiffrée, dans l'unité de mémoire, les informations de chiffrage indiquant que le texte en claire a été chiffré, et
les moyens de chiffrage récupèrent la première clé de fichier chiffrée qui est associée aux informations de chiffrage et déchiffrent la première clé de fichier chiffrée récupérée.

22. Dispositif pour la gestion de fichier selon la revendication 19,
dans lequel les moyens d'enregistrement reçoivent en outre une entrée d'un identificateur d'utilisateur qui identifie un utilisateur,
les moyens de chiffrage écrivent en outre l'identificateur d'utilisateur en association avec un identificateur de fichier qui identifie le texte chiffré, la première clé de fichier chiffrée et la deuxième clé de fichier chiffrée, comme un fichier unifié, dans l'unité de mémoire, et
les moyens de chiffrage extraient l'identificateur de fichier qui est associé à l'identificateur d'utilisateur à partir du fichier unifié, spécifient la première clé de fichier chiffrée identifiée par l'identificateur de fichier extrait et déchiffrent la première clé de fichier chiffrée spécifiée.

23. Dispositif pour la gestion de fichier selon la revendication 19,
dans lequel les moyens de chiffrage écrivent en outre des informations de chiffrage en association avec un identificateur de fichier qui identifie le texte chiffré, la première clé de fichier chiffrée et la deuxième clé de fichier chiffrée, comme un fichier unifié, dans l'unité de mémoire, les informations de chiffrage indiquant que le texte en clair a été chiffré, et
les moyens de chiffrage extraient l'identificateur de fichier chiffrée qui est associé aux informations de chiffrage à partir du fichier unifié, spécifient la première clé de fichier chiffrée identifiée par l'identificateur de fichier extrait et génèrent une clé de fichier à partir de la première clé de fichier chiffrée spécifiée.

24. Dispositif pour la gestion de fichier selon la revendication 15 comprenant en outre
des moyens d'effacement pour effacer la première clé de fichier chiffrée qui a été écrite dans l'unité de mémoire.

25. Dispositif pour la gestion de fichier selon la revendication 15,
dans lequel le support de stockage de clés stocke préalablement de nouvelles informations de clé, au lieu des informations de clé,
les moyens d'enregistrement reçoivent l'entrée du mot de passe et déchiffrent le mot de passe reçu en utilisant les nouvelles informations de clé pour générer un nouveau mot de passe chiffré et écrivent le nouveau mot de passe chiffré généré sur le mot de passe chiffré dans l'unité de mémoire, et
les moyens de chiffrage déchiffrent la deuxième clé de fichier chiffrée en utilisant le mot de passe pour générer une clé de fichier, chiffrent la clé de fichier en utilisant les nouvelles informations de clé pour générer une nouvelle première clé de fichier chiffrée et écrivent la nouvelle première clé de fichier chiffrée sur la première clé de fichier chiffrée dans l'unité de mémoire.

26. Dispositif pour la gestion de fichier selon la revendication 25,
dans lequel les moyens d'enregistrement reçoivent en outre une entrée d'un identificateur d'utilisateur qui identifie un utilisateur,
les moyens de chiffrage écrivent en outre l'identificateur d'utilisateur en association avec le texte chiffré, la première clé de fichier chiffrée et la deuxième clé de fichier chiffrée dans l'unité de mémoire,
les moyens de chiffrage récupèrent la deuxième clé de fichier chiffrée qui est associée à l'identificateur d'utilisateur et déchiffrent la deuxième clé de fichier chiffrée récupérée.

27. Dispositif pour la gestion de fichier selon la revendication 25,
dans lequel les moyens de chiffrage écrivent en outre des informations de chiffrage en association avec le texte chiffré, la première clé de fichier chiffrée et la deuxième clé de fichier chiffrée dans l'unité de mémoire, les informations de chiffrage indiquant que le texte en clair a été chiffré, et
les moyens de chiffrage récupèrent la deuxième clé de fichier chiffrée qui est associée aux informations de chiffrage et déchiffrent la deuxième clé de fichier chiffrée récupérée.

28. Dispositif pour la gestion de fichier selon la revendication 25,
dans lequel les moyens d'enregistrement reçoivent en outre une entrée d'un identificateur d'utilisateur qui identifie un utilisateur,
les moyens de chiffrage écrivent en outre l'identificateur d'utilisateur en association avec un identificateur de fichier qui identifie le texte chiffré, la première clé de fichier chiffrée et la deuxième clé de fichier chiffrée, comme un fichier unifié, dans l'unité de mémoire, et
les moyens de chiffrage extraient l'identificateur de fichier qui est associé à l'identificateur d'utilisateur à partir du fichier unifié, spécifient la deuxième clé de fichier chiffrée identifiée par l'identificateur de fichier extrait et déchiffrent la deuxième clé de fichier chiffrée spécifiée.

29. Dispositif pour la gestion de fichier selon la revendication 25,
dans lequel les moyens de chiffrage écrivent en outre des informations de chiffrage en association avec un identificateur de fichier qui identifie le texte chiffré, la première clé de fichier chiffrée et la deuxième clé de fichier chiffrée, comme un fichier unifié, dans l'unité de mémoire, les informations de chiffrage indiquant que le texte en clair a été chiffré, et
les moyens de chiffrage extraient l'identificateur de fichier chiffrée qui est associé aux informations de chiffrage à partir du fichier unifié, spécifient la deuxième clé de fichier chiffrée identifiée par l'identificateur de fichier extrait et génèrent une clé de fichier à partir de la deuxième clé de fichier chiffrée spécifiée.

30. Dispositif pour la gestion de fichier selon la revendication 25,
dans lequel les moyens de commutation reçoivent en outre une entrée du mot de passe, déchiffrent la deuxième clé de fichier chiffrée en utilisant le mot de passe reçu pour générer une deuxième clé de fichier, déchiffrent la première clé de fichier chiffrée en utilisant les informations de clé pour générer une première clé de fichier, jugent si la première clé de fichier et la deuxième clé de fichier correspondent, et détectent une erreur quand la première clé de fichier et la deuxième clé de fichier ne correspondent pas.
